(19) Europäisches Patentamt
European Patent Office
Office européen des brevets

(11) EP 3 266 834 B1

(12) EUROPÄISCHE PATENTSCHRIFT

(45) Veröffentlichungstag und Bekanntmachung des Hinweises auf die Patenterteilung:
**20.02.2019 Patentblatt 2019/08**

(51) Int Cl.:
***C09B 67/46** (2006.01)* ***C09D 17/00** (2006.01)*

(21) Anmeldenummer: **17177991.1**

(22) Anmeldetag: **27.06.2017**

(54) **UNIVERSALPIGMENTPRÄPARATION**

UNIVERSAL PIGMENT PREPARATION

PRÉPARATION DE PIGMENT UNIVERSELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2016 EP 16178526**

(43) Veröffentlichungstag der Anmeldung:
**10.01.2018 Patentblatt 2018/02**

(73) Patentinhaber: **Evonik Degussa GmbH**
**45128 Essen (DE)**

(72) Erfinder:
- **Roland, Katrin**
**45257 Essen (DE)**
- **Duerr, Christoph**
**46286 Dorsten (DE)**
- **Schubert, Frank**
**47506 Neukirchen-Vluyn (DE)**
- **Momper, David**
**45219 Essen (DE)**
- **Skotarczak, Aline**
**45144 Essen (DE)**
- **Blei, Marco**
**45138 Essen (DE)**
- **Ewald, Michael**
**45768 Marl (DE)**

(56) Entgegenhaltungen:
**EP-A1- 1 156 086** **WO-A1-2006/097378**
**WO-A1-2011/131682** **DE-A1- 10 310 523**

- **DATABASE WPI Week 201038 Thomson Scientific, London, GB; AN 2010-G02879 XP002765742, -& JP 2010 119930 A (RIKEN VITAMIN CO) 3. Juni 2010 (2010-06-03)**

EP 3 266 834 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft eine Universalpigmentpräparation zum Abmischen mit handelsüblichen Farb- und Bindemittelsystemen und deren Herstellung.

Universalpigmentpräparationen sind gut dosierbare Pigmentpräparationen, die zum Einfärben sowohl von wässrigen als auch von lösungsmittelhaltigen Lacken verwendet werden.

Bei der Herstellung von Universalpigmentpräparationen werden Dispergiermittel oder Emulgatoren eingesetzt, die die Pigmentteilchen in ihrer feinteiligen Form in einem wässrigen oder wässrig/organischen Medium physikalisch stabilisieren. Für die Auswahl der Dispergiermittel ist daneben die Verträglichkeit in den verschiedenen Anwendungsmedien essentiell. So sollen die Präparationen beispielsweise leicht und ohne Flokkulation oder Reaggregation der Pigmentteilchen in das Anwendungsmedium eingebracht werden.

Seit Einführung wasserverdünnbarer Basis- bzw. Decklacke stellt sich für Lackhersteller das Problem, jeden Farbton in Form des wasserverdünnbaren und zusätzlich des lösemittelbasierenden Lackes bzw. der betreffenden Vorprodukte herstellen und bevorraten zu müssen, um den unterschiedlichen Geräteausstattungen der Anwender entsprechen zu können.
Es ist notwendig, für jedes Lacksystem eine spezielle Anreibekomponente zur Herstellung einer geeigneten Pigmentpaste einzusetzen. Nach Herstellung der Pigmentpaste wird jeweils mit einem oder mehreren weiteren Bindemitteln der Lack vollständig eingestellt. Dabei müssen die Bestandteile aufeinander abgestimmt sein, um ein geeignetes Überzugsmittel zu erhalten, z. B. muss es lagerstabil sein und die hohen optischen Anforderungen erfüllen. Dabei kann im Hauptbindemittel des Lackes angerieben werden oder es werden spezielle Pastenharze (Anreibeharze) zur Herstellung der Pigmentpaste verwendet. Ein allgemeines Problem liegt nun in der Notwendigkeit, für jeden Farbton eine Pigmentpaste für jedes unterschiedliche Lacksystem erstellen und bevorraten zu müssen. Die Fertigung wird damit aufwendig und es wird eine große Lagerhaltung notwendig.

Im Architekturfarbensegment beispielsweise werden Universalpigmentpräparationen für das Einfärben von weißen oder transparenten Basisfarben verwendet. Dabei erfüllen diese Farben sowohl einen dekorativen als auch einen schützenden Zweck an Gebäuden. So können mit einer Universalpigmentpräparation eine wasserbasierte Dispersions-Wandfarbe und ein lösungsmittelhaltiger Alkyd-basierter Holzlack eingefärbt werden. Die Vorratshaltung und Rezepturentwicklung von zwei Pigmentpräparationen für den jeweiligen bestimmungsgemäßen Gebrauch müssen nicht mehr aufgewandt werden. In Baumärkten und bei Fachhändlern wird demnach nur eine Dispenseranlage zur Abmischung einer großen Vielzahl von Farbtönen benötigt.

Aus dem Stand der Technik ist bekannt, dass zur Herstellung von Universalpigmentpräparationen Alkylphenolethoxylate (APEs), speziell Octyl- oder Nonylphenolethoxylate, als Dispergieradditive im wässrigen Medium verwendet werden, da diese ein gutes Preis-Leistungs-Verhältnis aufweisen. Leider stellte sich heraus, dass die Abbauprodukte der APEs bioakkumulativ sind und als Hormonanaloga wirken. Für viele Anwendungen sind Nonylphenolethoxylate daher bereits verboten. Die Anwendung in Lacken und Farben ist in Deutschland zwar rechtlich noch erlaubt, jedoch gibt es einen starken Trend in der Industrie auf diese Rohstoffe zu verzichten.

Als Alternative zu APEs können Dispergieradditive auf Basis von Styroloxid eingesetzt werden. US 6,552,091 und EP 0 940 406 beschreiben die Synthese solcher Strukturen und deren Anwendung in wässrigen Universalpigmentpräparationen.

DE10 2011 010580 beschreibt hingegen die Verwendung von Oleylethoxylaten als Dispergieradditive in wässrigen Universalpigmentpräparationen. In der WO 2009/127668 A1 wird statt eines Dispergieradditivs ein Anreibemedium (sog. "Grinding Media") eingesetzt. Hierbei handelt es sich um eine wässrige Zubereitung aus einem wasserverdünnbaren Alkydharz und einem Acrylatharz. Dieses Grinding Media kann zur Herstellung von wässrigen Universalpigmentpasten verwendet werden.

Der Nachteil der oben beschriebenen Universalpigmentpräparationen/-pasten ist die Verwendung von Wasser. Somit ist die Anwendung im Bereich der Isocyanatvernetzten Polyurethan-Lacke (2K PU) nicht möglich. Universalpigmentpräparationen finden daher heute keine Anwendung im Bereich der Industriellen Lackierungen, wo der Einsatz von 2K PU Lacken geläufig ist.

Die WO 2006 097378 beschreibt eine wässrige und lösungsmittelhaltige Pigmentpräparation aus einem Keton-Formaldehyd-Anreibeharz und einem Styroloxid-haltigen Dispergiermittel als Anreibemedium. Als Lösungsmittel wird beispielsweise Butylglykol verwendet. Es wird beschrieben, dass diese Pigmentpräparationen sowohl in lösungsmittelhaltigen als auch lösungsmittelfreien Lacken eingesetzt werden können. Eine Anwendung in 2K PU Lacken wird nicht beschrieben.

Die Verwendung von wasserverträglichen organischen Lösungsmitteln in Universalpigmentpräparationen würde eine Nutzung im Bereich der 2K PU Lacke und damit der Industriellen Beschichtungen ermöglichen. Jedoch steht zum Beispiel Butylglykol unter dem Verdacht giftig zu sein. Daneben ist es wünschenswert den volatilen organischen Anteil (volatile organic content, VOC) in Lacken und in letzter Konsequenz auch in Pigmentpräparationen zu verringern. Die ChemVOCFarbV (Chemikalienrechtliche Verordnung zur Begrenzung der Emissionen flüchtiger organischer Verbindungen (VOC) durch Beschränkung des Inverkehrbringens lösemittelhaltiger Farben und Lacke) reguliert den Einsatz von VOC in Architekturfarben und Fahrzeuglackierungen. Diese Verordnung hat einen allgemeinen Trend in der Farben und Lack Industrie ausgelöst, so dass heute auch Industrielackhersteller eine Reduzierung von VOC anstreben. In China wurde kürzlich eine Steuer auf VOC in Lackprodukten eingeführt. Auch dies hat eine Welle der Umformulierung ausgelöst.

Eine VOC-freie Alternative sind feste Pigmentpräparationen mit 100 % Wirkstoff. Eine sogenannte "Stir-In" Pigmentpräparation wird in US 6,063,182 beschrieben. Die Anwendung umfasst wässrige Farben und Lacke. Ein Nachteil ist jedoch die Anreibung der Pigmente im wässrigen Medium und die nachfolgende Sprühtrocknung zum festen Material. EP 2 361 956 A1 beschreibt eine Zusammensetzung aus Pigment, Bindemittel, Harz und weiteren Additiven, um daraus feste Pigmentpräparationen z.B. in Tablettenform herzustellen. Die Herstellung erfolgt in Substanz, bevorzugt ohne organische Lösungsmittel oder Wasser. Je nach Rezeptur können diese Pigmentpräparationen für verschiedenste Anwendungen angepasst werden.

Trotz der Umweltfreundlichkeit und vermeintlich leichteren Handhabung haben sich feste Pigmentpräparationen im Markt bisher nicht durchgesetzt. Die Gründe dafür sind beispielsweise die begrenzte Universalität, schlechtere Verteilung bzw. längere Verteildauer bei der Einarbeitung in den Basislack im Vergleich zu flüssigen Präparationen und die schlechtere Dosierbarkeit beim sogenannten Color Matching, dem exakten Einstellen des Farbtons.

Es besteht daher der Bedarf, eine Universalpigmentpräparation zu entwickeln, welche für praktisch alle handelsüblichen Bindemittelsysteme, sowohl auf wässriger als auch auf organischer Lösungsmittelbasis, geeignet ist. Es ist wünschenswert, dass sie auch für Isocyanat-vernetzte Polyurethan-Lacke geeignet ist.

Überraschenderweise wurde gefunden, dass eine Universalpigmentpräparation enthaltend

- ein flockungsstabilisierendes Medium umfassend

  (a1) Umsetzungsprodukte von Di- oder Polycarbonsäuren oder Hydroxycarbonsäuren mit Di- oder Polyolen und
  (a2) Umsetzungsprodukte von Alkylenoxiden mit alkoxylierbaren Verbindungen,
  und

- mindestens ein Pigment

zu diesem Zweck eingesetzt werden kann.

Die erfindungsgemäße Universalpigmentpräparation ist zur Einfärbung von sowohl wässrigen als auch lösungsmittelhaltigen Lacken und insbesondere auch Zweikomponenten Polyurethan (2K PU) Lacken geeignet.

Vorzugsweise weist die erfindungsgemäße Universalpigmentpräparation ein Gewichtsverhältnis von flockungsstabilisierendem Medium zu Pigment 95:5 bis 5:95, bevorzugt 90:10 bis 10:90, besonders bevorzugt 85:15 bis 15:85 auf.

Bevorzugt beträgt das Gewichtsverhältnis von Umsetzungsprodukten (a1) zu Umsetzungsprodukten (a2) 10:90 bis 90:10, bevorzugt 20:80 bis 80:20, besonders bevorzugt 40:60 bis 60:40.

Das erfindungsgemäße flockungsstabilisierende Medium basiert auf einer Mischung von Umsetzungsprodukten (a1) und Umsetzungsprodukten (a2).

Die Umsetzungsprodukte (a1) werden durch Umsetzung von Di- oder Polycarbonsäuren oder Hydroxycarbosäuren und Di- oder Polyolen erhalten, wobei mindestens eine Di- oder Polycarbonsäure oder Hydroxycarbonsäure und mindestens eine Di- oder Polyolkomponente eingesetzt werden.

Bevorzugt wird mindestens eine ungesättigte Di- oder Polycarbonsäure eingesetzt. Damit handelt es sich bei den bevorzugten erfindungsgemäßen Polyestern um ungesättigte Polyester.

Der hier verwendete Begriff Di- und Polycarbonsäuren umfasst im Rahmen der vorliegenden Erfindung auch die entsprechenden Anhydride und/oder Ester der beschriebenen Di- und Polycarbonsäuren. Bei den Estern handelt es sich bevorzugt um Alkylester, besonders bevorzugt Methyl- oder Ethylester.

Es ist vorstellbar, Mischungen aus Di- und Polycarbonsäuren, deren Anhydriden und/oder Estern einzusetzen.

Bei den ungesättigten Di- oder Polycarbonsäuren handelt es sich bevorzugt um $\alpha$, $\beta$-ungesättigte Di- oder Polycarbonsäuren.

Aus den Druckschriften JP 2010 119930 A und DE 103 10 523 A1 sind bereits Verbindungen, die unter die Liste (a1) fallen, zum Einsatz als Dispergiermittel bekannt; in der JP 2010 119930 A dienen sie zum dispergieren keramischer Pulver; in der DE 103 10 523 A1 werden sie als Lösungsvermittler oder Dispergierhilfsmittel für die kontinuierliche Phase lagerstabiler (Micro)pigment-Dispersionen verwendet. Die Ethylenoxid/Propylenoxid-Addukte an Glyzerin der EP 1 156 086 A1 werden als Dispergiermittel in Tintenzusammensetzungen für Pigmente verwendet; Die WO 2006/097378 A1 beschreibt Universalpigmentpräparationen, die eine gute Lagerungs- und Flockulationsbeständigkeit sowie ein zufriedenstellendes optisches Erscheinungsbild abgeben. Besonders bevorzugt handelt es sich bei den Di- oder Polycarbonsäuren um Mischungen aus gesättigten und $\alpha,\beta$-ungesättigten Di- oder Polycarbonsäuren im molaren Verhältnis von 1:99 bis 99:1, bevorzugt 80:20 bis 40:60, besonders bevorzugt 70:30 bis 60:40.

Es können vorzugsweise Di- oder Polycarbonsäuren ausgewählt aus Citracon-, Fumar-, Itacon-, Malein- und/oder Mesaconsäure, 1,4-Cyclohexandicarbonsäure, Malonsäure, Bernsteinsäure, Glutarsäure, Methyltetra-, Methylhexahydrophthalsäure, Hexahydrophthalsäure, Tetrahydrophthalsäure, Dodecandisäure, Pimelinsäure, Adipinsäure, Azelainsäure, Korksäure, Sebacinsäure, oder deren Anhydride oder Ester, besonders bevorzugt Hexahydrophthalsäure, Tetrahydrophthalsäure, Adipinsäure oder Fumarsäure, oder deren Anhydride oder Ester oder Mischungen daraus eingesetzt werden.

Vorzugsweise können auch aromatische Di- und Polycarbonsäuren ausgewählt aus Phthalsäure, Isophthalsäure, Terephthalsäure, Pyromellitsäure oder Trimellitsäure, oder deren Anhydride oder Ester oder Mischungen daraus eingesetzt werden.

Vorzugsweise handelt es sich bei den Anhydriden um Bernsteinsäureanhydrid, Phthalsäureanhydrid, Maleinsäureanhydrid, Pyromellitsäureanhydrid, Hexahydrophthalsäureanhydrid, Methylhexahydrophthalsäureanhydrid, Tetrahydrophthalsäureanhydrid, Methyltetrahydrophthalsäureanhydrid oder Trimellitsäureanhydrid oder Mischungen daraus.

Vorzugsweise handelt es sich bei den Hydroxycarbonsäuren um Milchsäure, Hydroxystearinsäure, Ricinolsäure, Salicylsäure, Äpfelsäure, Citronensäure, Glykolsäure, Isocitronensäure, Mandelsäure, Tartronsäure, Weinsäure, Hydroxybutansäure, Hydroxypentansäure oder Hydroxyhexansäure und deren Ester, bevorzugt deren cyclische Ester oder Ester-Dimere, besonders bevorzugt Lactid, Valerolacton und Caprolacton, oder Mischungen daraus.

Es ist ebenfalls vorstellbar, Mischungen aus Di- und Polycarbonsäuren, deren Anhydriden und/oder Estern mit Hydroxycarbonsäuren und/oder deren Estern einzusetzen.

Vorzugsweise handelt es sich bei den Di- oder Polyolen um Polyalkylenglykole.

Die OH-Zahl der Polyalkylenglykole beträgt vorzugsweise größer als 0 mg KOH/g.

Besonders bevorzugt handelt es sich dabei um Polyalkylenglykole der Formel (I)

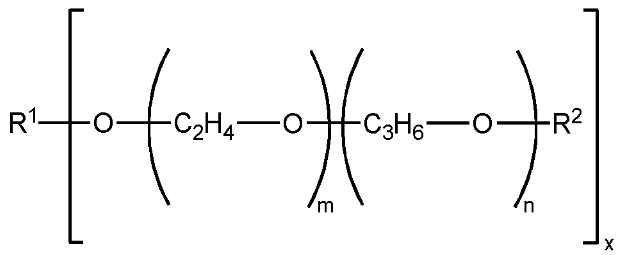

Formel (I)

mit

x = 1, 2, 3, 4 bis 10 mit der Maßgabe:

im Falle von x = 1 sind die Reste $R^1$ und $R^2$ Wasserstoff,
im Falle von x = 2, 3, 4 bis 10 der Rest $R^1$ ein linearer oder verzweigter, gesättigter, einfach oder mehrfach ungesättigter, aliphatischer, cycloaliphatischer oder aromatischer Kohlenwasserstoffrest mit 2 bis 50 Kohlenstoffatomen, bevorzugt mit 3 bis 30 Kohlenstoffatomen ist, der von Heteroatomen wie Sauerstoff, Stickstoff oder Schwefel unterbrochen sein kann, und $R^2$ ein Wasserstoff ist, wobei die in einer Anzahl von x an $R^1$ angebundenen Segmente gleich oder unterschiedlich aufgebaut sein können.

m = 0, 1, 2, 3 bis 100, bevorzugt 0, 1, 2, 3 bis 35,
n = 0, 1, 2, 3 bis 100, bevorzugt 0, 1, 2, 3 bis 30,
mit der Maßgabe, dass das Produkt x*(m+n) = 2, 3, 4 bis 100 beträgt, bevorzugt 2, 3, 4 bis 35.
Hierbei können die Wiederholeinheiten $(-C_2H_4-O-)_m$ und $(-C_3H_6-O-)_n$, bevorzugt blockartig, statistisch verteilt oder in einer Gradientenverteilung in der Polymerkette angeordnet sein.

Bevorzugt handelt es sich bei den Polyalkylenglykolen um Polypropylenglykole oder Polypropylen-Polyethylenglykole mit einer zahlenmittleren Molmasse von 100 bis 2000 g/mol, bevorzugt von 140 bis 1500 g/mol, besonders bevorzugt von 180 bis 1000 g/mol. (gemessen nach der unten beschriebenen Methode GPC 2)

Die Umsetzungsprodukte (a1) weisen vorzugsweise eine Säurezahl, bestimmt nach DIN EN ISO 2114, zwischen 1 und 150 mg KOH/g, bevorzugt zwischen 1 und 50 und besonders bevorzugt zwischen 1 und 20 mg KOH/g auf. Unter der Säurezahl (SZ) versteht man diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N ethanolischer Kalilauge gegen Phenolphthalein titriert.

Darüber hinaus weisen die Umsetzungsprodukte (a1) vorzugsweise eine OH-Zahl zwischen 1 und 450 mg KOH/g, bevorzugt zwischen 10 und 200 mg KOH/g und besonders bevorzugt zwischen 20 und 130 mg KOH/g auf.

Die Umsetzungsprodukte (a1) weisen vorzugsweise einen theoretischen Doppelbindungsgehalt von 0 bis 3

mmol/g, bevorzugt 0 bis 2 mmol/g, besonders bevorzugt 0,1 bis 0,7 mmol/g auf.

Die Umsetzungsprodukte (a1) weisen insbesondere ein Zahlenmittel der relativen Molmasse Mn zwischen 500 und 10 000 g/mol, bevorzugt zwischen 750 und 4000 g/mol, besonders bevorzugt zwischen 1000 und 3000 g/mol auf. Dieses lässt sich in einer für den Fachmann geläufigen Weise über die Molverhältnisse der reaktiven Gruppen der Rohstoffe und den Umsatz einstellen. (gemessen nach der unten beschriebenen Methode GPC 1)

Hergestellt werden die Umsetzungsprodukte (a1) vorzugsweise durch (halb)kontinuierliche oder diskontinuierliche Veresterung und Kondensation der Ausgangssäuren und -alkoholen, in einstufiger oder mehrstufiger Fahrweise. Die Synthese der Umsetzungsprodukte (a1) erfolgt bevorzugt über eine Kondensation in Substanz. Hierzu werden erfindungsgemäß die eingesetzten Di- oder Polycarbonsäuren oder Hydroxycarbonsäuren mit Di- oder Polyolen zur Reaktion gebracht. Die Polykondensation erfolgt bei Temperaturen zwischen 120 und 280 °C, bevorzugt zwischen 150 und 250 °C innerhalb von 1 bis 60 Stunden. Dabei wird zunächst ein Großteil der freiwerdenden Wassermenge bei Normaldruck abdestilliert. Im weiteren Verlauf wird das übrige Wasser sowie leicht flüchtige Di- oder Polyole abgespalten, bis das angestrebte Molekulargewicht erreicht ist. Gegebenenfalls kann dies durch verminderten Druck oder durch Durchleiten eines inerten Gasstroms erleichtert werden. Bei Einsatz der Säurekomponenten in Form von Alkylestern werden außerdem die bei der Esterspaltung erhaltenen flüchtigen Alkohole abgetrennt. Die Reaktion kann zusätzlich durch Zugabe eines Schleppmittels und/oder eines Katalysators vor oder während der Reaktion beschleunigt werden.

Geeignete Schleppmittel sind beispielsweise Toluol und Xylole. Typische Katalysatoren sind Organotitan- oder Zinn-verbindungen wie Tetrabutyltitanat oder Dibutylzinnoxid. Denkbar sind auch Katalysatoren, die auf anderen Metallen wie z. B. Zink oder Antimon basieren, sowie metallfreie Veresterungskatalysatoren.

In einer weiteren Ausführungsform können Alkanolamine, bevorzugt *N*-MethylDiethanolamin, Triethanolamin, Triisopropylamin, 2-(Dimethylamino)-ethanol, als weitere Alkoholkomponente bei der Herstellung der Umsetzungsprodukte (a1) zugesetzt werden.

Weiterhin ist der Einsatz weiterer Additive und Fahrhilfsmittel wie Antioxidantien oder Radikal- und Farbstabilisatoren möglich.

In einer anderen Ausführungsform ist es erforderlich, das Molgewicht der Umsetzungsprodukte (a1) durch geeignete Modifizierung zu erhöhen.

Vorzugsweise können die terminalen Hydroxy-Gruppen der Umsetzungsprodukte (a1) aus Hydroxycarbonsäuren und Di- oder Polyolen weiter umgesetzt werden. Die weitere Umsetzung kann mit Di- oder Polycarbonsäuren, Glycidylestern oder Isocyanaten, bevorzugt Diisocyanaten oder Dicarbonsäuren durchgeführt werden.

Vorzugsweise werden die Umsetzungsprodukte (a2) durch eine Alkoxylierungsreaktion von alkoxylierbaren Verbindungen der Formel (II)

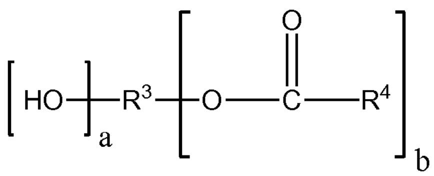

Formel (II),

wobei

$R^3$ ein linearer oder verzweigter, gesättigter, einfach oder mehrfach ungesättigter aliphatischer, cycloaliphatischer oder aromatischer Kohlenwasserstoffrest mit 2 bis 50 Kohlenstoffatomen, bevorzugt mit 3 bis 30 Kohlenstoffatomen ist, der von Heteroatomen wie Sauerstoff, Stickstoff oder Schwefel unterbrochen sein kann,

$R^4$ ein linearer oder verzweigter, gesättigter, einfach oder mehrfach ungesättigter aliphatischer, cycloaliphatischer oder aromatischer Kohlenwasserstoffrest, der von Heteroatomen wie Sauerstoff, Stickstoff oder Schwefel unterbrochen und mit OH-Gruppen substituiert sein kann mit 1 bis 22 Kohlenstoffatomen, bevorzugt mit 6 bis 20 Kohlenstoffatomen ist,

a = 1 bis 8, bevorzugt 2 bis 6,

b = 0 bis 7, bevorzugt 1 bis 4, besonders bevorzugt kleiner oder gleich 3, mit der Maßgabe, dass die Summe aus a und b = 2 bis 8, bevorzugt 3 bis 6, besonders bevorzugt kleiner als 6 ist, mit Alkylenoxiden hergestellt werden

Vorzugsweise handelt es sich bei den alkoxylierbaren Verbindungen um Diole, Polyole, Ethylenglykol, Diethylengykol, Polyethylenglykol, Propylenglykol, Dipropylenglykol, Polypropylenglykol, Polyetherole, Hexandiol, Butandiol, Neopentylglykol, Hexylenglykol, Ricinolsäure, Hydroxystearinsäure und Polyhydroxystearinsäure, Glycerin, Polyglycerin, Pentaerythrit, Trimethylolpropan, mehrfach OH-funktionelle Phenole wie Novolake oder Polyphenole, Sorbitol, Sorbitan, Isosorbid, Mannit und Zucker wie Glucose, Saccharose sowie deren Ester und Fettsäure wie Ölsäure,

Laurinsäure, Stearinsäure, vorzugsweise Hydroxystearinsäure, Glycerin, Polyglycerin, Pentaerythrit, Trimethylolpropan und Fettsäureester des Sorbitans.

Bevorzugte Reste $R^4$ in Formel (II) sind solche, die sich aus Verbindungen der Gruppe der einwertigen Carbonsäuren, der aromatischen Carbonsäuren oder der cycloaliphatischen Carbonsäuren ableiten. Besonders bevorzugt sind die Reste $R^4$, die sich von einer Fettsäure ableiten. Insbesondere bevorzugt sind die Reste $R^4$, die sich ableiten von Hexansäure, Heptansäure, Octansäure, Nonansäure, Decansäure, Undecansäure, Dodecansäure, Tridecansäure, Tetradecansäure, Pentadecansäure, Hexadecansäure, Heptadecansäure, Octadecansäure (Stearinsäure), Hydroxystearinsäure, Nonadecansäure, Icosansäure, 2-Ethylhexancarbonsäure, Isononansäure, 3,5,5-Trimethylhexancarbonsäure, Neodecansäure, Isotridecancarbonsäure, Isostearinsäure, Undecylensäure, Ölsäure, Linolsäure, Ricinolsäure, Linolensäure, Benzoesäure, Zimtsäure.

Bevorzugte alkoxylierbare Verbindungen gemäß Formel (I) sind Glycerin, Polyglycerin, Trimethylolpropan, Pentaerythrit, Fettsäureester von Sorbitan und sich von Naturstoffen ableitende mehrfach OH-funktionelle Verbindungen wie Sorbitol, Sorbitan, Isosorbid, Mannit und Zucker wie Glucose, Saccharose sowie deren Ester mit Fettsäuren wie Ölsäure, Laurinsäure, Ricinolsäure, Stearinsäure und Hydroxystearinsäure.

Sofern im Umfang dieser Erfindung auf Naturstoffe Bezug genommen wird, z.B. Sorbit, sind grundsätzlich alle Isomeren damit gemeint, bevorzugt sind die jeweils in der Natur vorkommenden Isomere, im hier genannten Falle also das D-(-)-Sorbit. Zur Definition von Naturstoffen wird auf den Umfang des "Dictionary of Natural Products", Chapman and Hall/CRC Press, Taylor and Francis Group, z.B. in der online Ausführung von 2011: http://dnp.chemnetbase.com/ verwiesen.

Auch beliebige Gemische von alkoxylierbaren Verbindungen der Formel (II) können im Sinne der Erfindung eingesetzt werden. Für den Fall, dass mehrere alkoxylierbare Verbindungen als Gemisch verwendet werden, können a und b auch einer statistischen Verteilung unterliegen.

Unter alkoxylierbaren Verbindungen werden im Rahmen der vorliegenden Erfindung Verbindungen verstanden, die den Anfang (Start) der herzustellenden Umsetzungsprodukte (a2) oder Alkoxylierungsprodukte bilden, das durch die Anlagerung von Alkylenoxiden erhalten wird.

Die erfindungsgemäß eingesetzten Umsetzungsprodukte (a2) werden durch Alkoxylierungsreaktion hergestellt. Alkoxylierungsreaktionen sind dem Fachmann weithin bekannt und die Umsetzungsprodukte (a2) sind die Reaktionsprodukte einer Polyaddition von Alkylenoxiden wie Ethylenoxid, Propylenoxid, Butylenoxid und/oder Styroloxid an die OH-funktionellen der alkoxylierbaren Verbindungen der Formel (II).

Bevorzugt werden erfindungsgemäß Ethylenoxid und Propylenoxid sowie beliebige Gemische beider Alkylenoxide verwendet.

Die Epoxidmonomere können in reiner Form oder gemischt eingesetzt werden. Die Oxyethylen- und Oxypropyleneinheiten der Polyetherketten sind wahlweise blockartig oder statistisch in der Polyetherkette (Umsetzungsprodukte (a2)) verteilt.

Auch kann die Dosierung eines weiteren Epoxides zu einem bereits in der Reaktionsmischung vorliegenden Epoxid kontinuierlich über die Zeit erfolgen, so dass ein zunehmender Konzentrationsgradient des kontinuierlich zugegebenen Epoxides entsteht. Die entstehenden Polyoxyalkylene unterliegen damit einer statistischen Verteilung im Endprodukt. Die Zusammenhänge zwischen Dosierung und Produktstruktur sind dem Fachmann bekannt.

Als Katalysator für die Alkoxylierungsreaktion werden die dem Fachmann bekannten alkalischen Katalysatoren wie Kaliumhydroxid, Kalilauge, Natriummethanolat oder Kaliummethanolat verwendet. Startverbindung und Katalysator werden am Anfang des Prozesses vor der Alkylenoxiddosage im Reaktor vorgelegt, wobei die Katalysatormenge so einzustellen ist, dass eine ausreichende katalytische Aktivität für das Verfahren gegeben ist. Die Reaktionstemperatur liegt vorzugweise bei 80 bis 220 °C, besonders bevorzugt bei 100 bis 180 °C. Der Reaktorinnendruck beträgt dabei bevorzugt 0,5 bar bis 15 bar, bevorzugt 1,0 bis 12 bar (absolut).

Nach Beendigung der Epoxidaddition folgt vorzugsweise eine Nachreaktion zur Vervollständigung des Umsatzes. Die Nachreaktion kann z. B. durch Weiterreaktion bei Reaktionsbedingungen (also Beibehaltung z.B. der Temperatur und des Druckes) ohne Zugabe von Edukten durchgeführt werden. Vorzugsweise erfolgt die Nachreaktion unter Durchmischung des Reaktionsgemisches, insbesondere unter Rühren.

Nicht abreagierte Epoxide und eventuell weitere flüchtige Bestandteile können z.B. durch Vakuumdestillation, Wasserdampf- oder Gasstrippen oder andere Methoden der Desodorierung entfernt werden. In einem optionalen anschließenden Schritt wird das Reaktionsprodukt mit einer Säure wie Milchsäure, Essigsäure, Propionsäure oder Phosphorsäure neutralisiert und die entstandenen Salze gegebenenfalls durch Filtration entfernt.

Optional können den Umsetzungsprodukte (a2) weitere Stoffe wie Stabilisatoren und Antioxidanzien zugefügt werden.

Als Reaktoren für die Alkoxylierung im ersten Verfahrensschritt können prinzipiell alle geeigneten Reaktortypen zum Einsatz kommen, die die Reaktion und ihre Wärmetönung beherrschen lassen. Der erste Verfahrensschritt kann in verfahrenstechnisch bekannter Art und Weise kontinuierlich, semi-kontinuierlich oder auch batchweise erfolgen.

Im Stand der Technik sind diverse Schriften bekannt, in denen Alkohole, Carbonsäuren oder Amine als Startverbindungen für die Alkoxylierungsreaktion eingesetzt werden. Einen guten Überblick über Polyoxyalkylene und Verfahren zur Herstellung von Polyoxyalkylenen bietet "N. Schönfeldt, Surface Active Ethylene Oxide Adducts, Pergamon Press, 1969".

Die Umsetzungsprodukte (a2) weisen bevorzugt eine gewichtsmittlere Molmasse von 300 bis 15 000 g/mol, besonders bevorzugt von 400 bis 5 000 g/mol und besonders bevorzugt von 500 bis 2800 g/mol auf und unterliegen einer Molmassenverteilung. (gemessen nach der unten beschriebenen Methode GPC 2)

Die Umsetzungsprodukte (a2) sind vorzugsweise farblose bis orange oder bräunliche Produkte, die klar oder opak sein können. Je nach Aufbau der Polyoxyalkylenkette sind die Produkte entweder bei Raumtemperatur flüssig, wachsartig oder fest.

Bevorzugt sind flüssige Produkte mit weniger als 10 000 mPas (100 1/s, 25 °C), weiter bevorzugt weniger als 8000 mPas (bei 100 1/s, 25 °C), besonders bevorzugt weniger als 5000 mPas (bei 100 1/s, 25 °C).

In der alkalisch katalysierten Alkoxylierungsreaktion zur Herstellung der Umsetzungsprodukte (a2) werden 3 bis 200 mol, bevorzugt 5 bis 150 mol, besonders bevorzugt 10 bis 100 mol Alkylenoxid bezogen auf die Summe von a und b eingesetzt.

Charakterisierendes Merkmal der Umsetzungsprodukte (a2) ist die Präsenz von Polyoxyalkylenketten. Geeignet sind insbesondere Umsetzungsprodukte (a2), die aus solchen Startern der Formel (II) hervorgehen, bei denen der Index b gleich Null ist, wo also keine Carboxyreste vorhanden sind. Es kann in ausgewählten Anwendungen von Vorteil sein, die terminalen OH-Gruppen ganz oder teilweise zu verkappen, um z.B. ungewünschte Reaktionen oder Wechselwirkungen mit anderen Komponenten in den Universalpigmentpräparationen zu vermeiden.

Bevorzugt sind daher auch Umsetzungsprodukte (a2), bei denen eine oder mehrere OH-Gruppen) mit einer Alkylgruppe, insbesondere mit einer Methylgruppe verethert ist. Die Methylierung der OH-Gruppen kann z.B. mit Hilfe von Methylchlorid nach dem Prinzip der Williamson-Ether Synthese durchgeführt werden.

Bevorzugt sind ebenfalls Umsetzungsprodukte (a2), bei denen eine oder mehrere OH-Gruppen verestert sind. Solche Verbindungen werden z.B. durch eine Veresterung der OH-Gruppen mit Fettsäuren, Essigsäure oder Essigsäureanhydrid hergestellt.

Verwendbar sind auch Umsetzungsprodukte (a2), die nur partiell endverkappt sind und noch über restliche OH-Gruppen verfügen.

Ist Index b in Formel (II) ungleich Null, so stellen die erfindungsgemäß eingesetzten Polyether der Komponente a2 komplexe polymere Produktgemische dar, die nicht mit einer einfachen chemischen Formel zu beschreiben sind.

Dem Fachmann ist bekannt, dass unter alkalischen Alkoxylierungsbedingungen die Carboxyreste teilweise abgespalten werden unter Entstehung einer Carboxylatverbindung und OH-Verbindung. Diese entstehenden Spaltprodukte können ihrerseits als Startverbindungen für die Polyaddition von Alkylenoxiden fungieren. Gleichzeitig können Umesterungsreaktionen stattfinden, so dass ein komplex zusammengesetztes Produktgemisch entsteht.

Vorzugsweise handelt es sich bei den Pigmenten um organische, anorganische Pigmente oder Rußpigmente.

Als anorganische Pigmente können beispielsweise Eisenoxide, Chromoxide oder Titanoxide genannt werden.

Geeignete organische Pigmente sind beispielsweise Azopigmente, Metallkomplex-Pigmente, anthrachinoide Pigmente, Phthalocyaninpigmente, polycyclische Pigmente, insbesondere solche der Thioindigo-, Chinacridon-, Dioxazin-, Pyrrolopyrrol-, Napthalenetetracarbonsäure-, Perylen-, Isoamidolin(on)-, Flavanthron-, Pyranthron- oder Isoviolanthron-Reihe.

Als Ruße können Gasruße, Flammruße oder Furnaceruße eingesetzt werden. Diese Ruße können zusätzlich nachoxidiert und/oder verperlt sein.

Die erfindungsgemäße Pigmentpräparation enthält vorzugsweise

- 0,5 bis 85,5 Gew.-% von Umsetzungsprodukte (a1),
- 0,5 bis 85,5 Gew.-% von Umsetzungsprodukte (a2) und
- 5 bis 95 Gew.-% mindestens eines Pigmentes, ausgewählt aus der Gruppe der organischen, anorganischen oder Rußpigmente.

Optional können weitere Hilfskomponenten zugesetzt werden. Als Hilfskomponente gilt dabei jegliche Komponente, die die Eigenschaften der erfindungsgemäßen Universalpigmentpräparation positiv beeinflusst. Es können unabhängig voneinander ein oder mehrere Hilfskomponenten zugesetzt werden. Im Weiteren werden einige Hilfskomponenten aufgeführt, die für die erfindungsgemäße Universalpigmentpräparation verwendet werden können. Die Aufzählung ist nicht abschließend:
Als Hilfskomponente sind insbesondere Netz- und Dispergieradditive vorteilhaft einsetzbar. Im Markt ist eine Vielzahl von Netz- und Dispergieradditiven erhältlich, die für die erfindungsgemäßen Universalpigmentpräparationen verwendet werden können. Als geeignete chemische Basis können beispielsweise Styrol-Maleinsäureanhydrid Copolymere, Acrylate, Polyether, z.B. Styroloxidpolyether, Polyester, Aminopolyester, Polyurethane und Aminopolyether genannt werden.

Dabei können die Additive unterschiedliche Topologien aufweisen, beispielsweise linear, verzweigt, kammartig oder sternförmig. Üblicherweise weisen Netz- und Dispergieradditive eine heterogene Struktur auf, die sich in eine Haftgruppe und eine stabilisierende Seitenkette aufteilt.

Neben Pigmenten können auch Füllstoffe in den erfindungsgemäßen Universalpigmentpräparationen eingesetzt werden. Geeignete Füllstoffe sind beispielsweise solche auf Basis von Kaolin, Talkum, Glimmer, anderen Silikaten, Quarz, Christobalit, Wollastonit, Perlite, Diatomeenerde, Faserfüllstoffe, Alumiumhydroxid, Bariumsulfat, Glas oder Calciumcarbonat.

Synergisten sind pigmentähnliche Feststoffe, die zum Beispiel zur Verbesserung der Rheologie einer Pigmentpräparation eingesetzt werden können. Genannt seien beispielsweise Synergisten auf Phthalocyanin-Basis.

Die Verwendung eines Entschäumers oder Entlüfters kann vorteilhaft sein, um in Verarbeitungs- bzw. Herstellungsprozessen die eingetragene Luftmenge aktiv zu reduzieren. Genannt seien beispielsweise solche auf Mineral- oder Pflanzenölbasis oder auf Basis von Polyethersiloxanen, teilweise gefüllt mit partikulären Komponenten wie zum Beispiel Silica.

Ein Humectant ist ein Feuchthaltemittel, das in Pigmentpräparationen eingesetzt wird, um eine oberflächliche Antrocknung zu verhindern. Genannt seien beispielsweise kurzkettige Polyether.

Es kann vorteilhaft sein, in der erfindungsgemäßen Universalpigmentpräparation ein saures oder basisches Neutralisationsmittel zu verwenden, um die Verträglichkeit mit dem späteren Basislack zu verbessern. Als saure Neutralisationsmittel kommen dabei flüssige Carbonsäuren wie beispielsweise monomere oder polymere Fettsäuren oder saure Polyester zum Einsatz. Als basische Neutralisationsmittel können niedermolekulare Amine wie beispielsweise Triethanolamin, Triisopropanolamin, 2-(Dimethylamino)-ethanol, 2-Amino-2-methyl-1-propanol oder Ammoniak oder polymere Amine wie beispielsweise Aminopolyether oder Aminopolyester verwendet werden.

Als weitere Hilfskomponenten können beispielsweise Bindemittel, Farbstoffe, Oberflächenadditive, Compatibilizer, UV Stabilisatoren und Konservierungsmittel genannt werden.

Vorzugsweise weist die erfindungsgemäße Universalpigmentpräparation einen volatilen organischen Anteil von < 20 Gew.-%, bevorzugt < 10 Gew.-%, besonders bevorzugt < 5 Gew.-% auf.

Vorzugsweise weist sie bei Raumtemperatur eine fließfähige Konsistenz auf.

Bevorzugt weist sie bei 25 °C und 100 1/s eine Viskosität von < 5000 mPas, bevorzugt < 3000 mPas und besonders bevorzugt < 2000 mPas auf.

Ein weiterer Gegenstand der Erfindung ist ein flockungsstabilisierendes Medium enthaltend

- 10 bis 90 Gew.-%, bevorzugt 20 bis 80 Gew.-%, besonders bevorzugt 40 bis 60 Gew.-% der Umsetzungsprodukte (a1) und
- 90 bis 10 Gew.-%, bevorzugt 80 bis 20 Gew.-%, besonders bevorzugt 60 bis 40 Gew.-% der Umsetzungsprodukte (a2), bezogen auf die Summe aus Umsetzungsprodukten (a1) und Umsetzungsprodukten (a2) von 100 Gew.-%, welches vorzugsweise zur Herstellung von Pigmentpräparationen eingesetzt werden kann.

Auch die Verwendung der erfindungsgemäßen Universalpigmentpräparation zur Herstellung von Farben, Lacken, Druckfarben, Beschichtungsstoffen, Fußbodenbeschichtungen, Vergussmassen, Spachtelmassen ist Gegenstand der Erfindung.

Geeignete Lacksysteme, in die die erfindungsgemäßen Universalpigmentpräparationen eingearbeitet werden können, sind jegliche lösungsmittelhaltig oder wässrig formulierte Einkomponenten- oder Zweikomponenten-Lacksysteme (1K bzw. 2K), aber auch lösungsmittelfreie Systeme.

Beispiele für 1K Lacksysteme sind solche basierend auf Alkyd-, Acrylat-, Styrolacrylat-, Epoxy-, Polyvinylacetat-, Polyester- oder Polyurethanbindemitteln. Dabei ist jede Art der Aushärtung möglich, beispielsweise oxidativ trocknend, physikalisch trocknend, selbstvernetzend; UV- oder Elektronenstrahl-härtend oder vernetzend durch Einbrennen.

2K Lacksysteme vernetzen durch die Zugabe mindestens einer Härterkomponente. Häufig werden jedoch Vernetzungsmechanismen kombiniert, um eine bessere Haltbarkeit zu erzielen. Dabei sind alle Kombinationen von Härtungsmechanismen zulässig. Beispielsweise können als 2K Systeme Hydroxylgruppen-haltige Polyester oder Polyacrylatharze mit Isocyanaten oder blockierten Isocyanaten oder Melaminharzen zur Vernetzung gebracht werden. Ferner seien Epoxysysteme genannt, bei denen das Epoxybindemittel mit einem Aminhärter zur Reaktion gebracht wird.

Ein weiterer Gegenstand der Erfindung ist das Verfahren zur Herstellung der Universalpigmentpräparation, wobei zunächst die Umsetzungsprodukte (a1) und die Umsetzungsprodukte (a2) hergestellt werden und anschließend vermischt werden, wobei keine Zugabe von flüchtigen organischen Lösungsmitteln und/oder Wasser erfolgt, und danach die Pigmente beigemengt werden.

Vorzugsweise können weitere Komponenten zugesetzt werden.

Die oben genannte Reihenfolge der Verfahrensschritte ist frei wählbar.

Als flüchtige organische Lösungsmittel werden Verbindungen mit einem Siedepunkt unter 250 °C (VOC) verstanden.

In der vorliegenden Erfindung werden Umsetzungsprodukte (a1) und (a2) nicht als flüchtige organische Lösungsmittel verstanden.

Die erfindungsgemäßen Gegenstände werden nachfolgend beispielhaft beschrieben, ohne dass die Erfindung auf diese beispielhaften Ausführungsformen beschränkt sein soll.

**Messmethoden:**

Zur Bestimmung von Parametern oder Messwerten werden vorzugsweise die nachfolgend beschriebenen Methoden verwendet. Insbesondere wurden diese Methoden in den Beispielen des vorliegenden Schutzrechts verwendet.

**GPC 1**

Die relativen Molmassen der erfindungsgemäßen Umsetzungsprodukte (a1) werden durch Größenausschlußchromatographie (GPC) bestimmt. Dazu werden drei Säulen von Merck (PS 400, 250*7 mm, PS 40, 250*7 mm, und PS 1, 250*7 mm) mit einer Teilchengröße von 5 $\mu$m in Reihe kombiniert. Nach der Kalibration werden 20 $\mu$l der Kondensationsharzlösung in Tetrahydrofuran (cKondensationsharz = 20 mg/ml) bei 40 °C mit einem Rheodyne 7125 Injektor injiziert und mit einer Flußrate von 1 ml/min (HPLC Pumpe 510 von Waters) bei 40 °C mit entgastem Tetrahydrofuran als mobiler Phase und einem Differentialrefraktometer bei 40 °C (Model 410 von Waters) analysiert. Die Auswertung erfolgt nach Kalibration gegen Polystyrolstandards, die in der zuvor beschriebenen Weise durchgeführt wird. Polystyrolstandards (Standard 1 Mp 377400, Mp 96000, Mp 20650, Mp 1300, Mp 162; Standard 2 Mp 283300, Mp 50400, Mp 10850, Mp 2930, Mp 980; Standard 3 Mp 218800, Mp 68900, Mp 10050, Mp 1940, Mp 580; Mp = Molare Masse im Peakmaximum) sind beispielsweise bei Merck oder Polymer Laboratories kommerziell erhältlich.

**GPC 2**

GPC-Messungen zur Bestimmung der Polydispersität und der mittleren Molmassen Mw oder Mn wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

**Säurezahlen** wurden nach DIN EN ISO 2114 bestimmt.

Die angegebenen **Viskositäten** der erfindungsgemäßen Umsetzungsprodukte (a1) wurden mit einem Anton Paar Rotationsviskosimeter M102 und der Messgeometrie CP50/2 bei 23 ° C und einer Scherrate von 100 1/s bestimmt.

**Glasübergangstemperaturen** wurden nach DIN 53765 bestimmt.

**Bestimmung der OH-Zahl**

Hydroxylzahlen wurden nach der Methode DGF C-V 17 a (53) der Deutschen Gesellschaft für Fettwissenschaft bestimmt. Dabei wurden die Proben mit Essigsäureanhydrid in Gegenwart von Pyridin acetyliert und der Verbrauch an Essigsäureanhydrid durch Titration mit 0,5 N Kalilauge in Ethanol gegen Phenolphthalein bestimmt.

**1. Herstellung von erfindungsgemäßen Umsetzungsprodukte (a1)**

**Umsetzungsprodukte a1-1 :**

Adipinsäure und Fumarsäure (molares Verhältnis 1,95 : 1) wurden in einem molaren Verhältnis der COOH- zu OH-Gruppen von 1 : 1,96 mit Polypropylenglykol 725 und Methyldiethanolamin (molares Verhältnis 12,17 : 1) bei 180 °C bis 190°C unter Stickstoffatmosphäre zur Reaktion gebracht bis eine Säurezahl von 7 mg KOH/g und

eine OH-Zahl von 79 mg KOH/g erreicht war.
Mn = 2000 g/mol
Mw = 3300 g/mol
Glasübergangstemperatur -67 °C
Viskosität bei 23 °C: 530 mPas

**Umsetzungsprodukte a1-2:**

Adipinsäure und Fumarsäure (molares Verhältnis 1,99 : 1) wurden in einem molaren Verhältnis der COOH- zu

OH-Gruppen von 1 : 2,55 mit Polypropylenglykol 725 bei 240 °C unter Stickstoffatmosphäre zur Reaktion gebracht bis eine Säurezahl von 6 mg KOH/g und eine OH-Zahl von 85 mg KOH/g erreicht war.

Mn = 1800 g/mol
Mw = 2800 g/mol
Glasübergangstemperatur -68 °C
Viskosität bei 23 °C: 408 mPas

Polypropylenglycol 725 ist unter anderem unter dem Handelsnamen ARCOL® PPG-725 von der Firma Covestro erhältlich.

**2. Herstellung von Umsetzungsprodukten (a2):**

**Umsetzungsprodukte a2-1:**

Herstellung eines Polyoxyalkylens aus Glycerin mit PO und EO

In einem 15 Liter Autoklaven wurden 380 g Glycerin und 23,2 g Kaliumhydroxid vorgelegt und unter Rühren auf 115 °C erhitzt. Der Reaktor wurde bis auf einen Innendruck von 30 mbar evakuiert, um evtl. vorhandene flüchtige Inhaltsstoffe destillativ zu entfernen, und danach mit Stickstoff bis 3 bar beaufschlagt. Der Innendruck wurde anschl. wieder auf <30 mbar gesenkt. In den inertisierten Reaktor wurden 7868 g Propylenoxid (PO) unter Kühlung binnen 10 h bei 115 °C Innentemperatur und einem Innendruck von 3 bis 4 bar (absolut) zudosiert. Nach 1 h Nachreaktion bei 115 °C wurden 2729 g Ethylenoxid (EO) innerhalb von 3 h bei 115 °C Innentemperatur und einem Innendruck von 2 bis 3 bar (absolut) in den Reaktor dosiert. Anschließend wurden flüchtige Anteile im Vakuum bei 115 °C destillativ entfernt. Nach 1 h Nachreaktion bei 115 °C wurde das Reaktionsprodukt auf 90 °C abgekühlt, mit Phosphorsäure neutralisiert und über einen Filter aus dem Reaktor abgelassen. Das Produkt war fast farblos und bei Raumtemperatur niedrig viskos. Die OH-Zahl war 63 mg KOH/g, die Säurezahl 0,1 mg KOH/g. Gemäß GPC 2 weist das Produkt eine gewichtsmittlere Molmasse $M_w$ von 2267 g/mol und eine Polydispersität $M_w/M_n$ von 1,04 auf.

**Umsetzungsprodukte a2-2:**

Herstellung von ethoxiliertem Sorbitanmonooleat

In einem 7 Liter Autoklaven wurden 1500 g Sorbitanmonooleat und 2,6 g Kalilauge (45 %ig) vorgelegt und unter Rühren auf 120 °C erhitzt. Der Reaktor wurde bis auf einen Innendruck von 30 mbar evakuiert, um Wasser und evtl. weitere flüchtige Inhaltsstoffe destillativ zu entfernen, und danach mit Stickstoff bis 3 bar beaufschlagt. Der Innendruck wurde anschl. wieder auf <30 mbar gesenkt. In den inertisierten Reaktor wurden 3050 g Ethylenoxid unter Kühlung binnen 3 h bei 160 °C Innentemperatur und einem Innendruck von 3 bis 4 bar (absolut) zudosiert. Nach 1 h Nachreaktion bei 160 °C wurde das Reaktionsprodukt auf 120 °C abgekühlt und bei <30mbar entgast. Anschließend wurde auf 90 °C abgekühlt, mit Milchsäure neutralisiert und über einen Filter aus dem Reaktor abgelassen. Das flüssige Produkt war leicht gelblich. Die OH-Zahl war 71 mg KOH/g, die Säurezahl 0,4 mg KOH/g. Gemäß GPC 2 weist das Produkt eine gewichtsmittlere Molmasse $M_w$ von 1704 g/mol und eine Polydispersität $M_w/M_n$ von 1,18 auf.

**3. Herstellung der erfindungsgemäßen Universalpigmentpräparationen sowie Vergleichspräparationen zur Überprüfung der Viskosität**

Nach den in Tabelle 2Tabelle genannten Rezepturen wurde aus den erfindungsgemäßen Umsetzungsprodukten (a1) und (a2) eine Universalpigmentpräparation (P1 bis P9) hergestellt. Im Vergleich wurden Pigmentpräparationen mit marktüblichen Anreibeharzen anstelle der Umsetzungsprodukte (a1) und den erfindungsgemäßen Umsetzungsprodukten (a2) erstellt (VG P1 bis VG P6).

Die Umsetzungsprodukte (a1) bzw. die Vergleichsprodukte wurden in PE-Bechern vorgelegt und anschließend Umsetzungsprodukte (a2) sowie weitere flüssige Komponenten zudosiert. Es wurde kurz mit einem Metalspatel per Hand homogenisiert und anschließend das Pigment zugewogen. Nach erneuter Homogenisierung per Hand wurde eine definierte Menge Glasperlen zugewogen (siehe Tabelle 1). Die Dispergierung erfolgte in einem Speedmixer der Firma Hauschild bei einer Drehzahl von 2000 U/min und den in Tabelle angegebenen Dispergierzeiten. Die so erhaltenen erfindungsgemäßen Universalpigmentpräparationen wurden über 250 μm Nylon Schnellsiebe abgesiebt.

**Tabelle 1:** Dispergierparameter

| | Glasperlen (g) (d=1,1mm) | Dispergierdauer |
|---|---|---|
| Heliogenblau L7085 | 50 | 8 min |
| Spezial Schwarz 4 | 50 | 8 min |
| Bayferrox 130 M | 30 | 4 min |

**Viskositäten-Messung der Präparationen:**

Die Viskositäten der erfindungsgemäßen Universalpigmentpräparationen sowie Vergleichsbeispiele wurden mit einem Rheometer der Firma Haake, Typ RheoStress 1 gemessen. Messparameter: Kegel/Platte C35/2°, 23 °C, mehrere Messpunkte im Bereich von 1 - 1000 1/s. Ausgewertet wurde die Viskosität bei 100 1/s. Die Ergebnisse sind in Tabelle 2 aufgeführt.

**Tabelle 2:** Rezepturen zur Herstellung der erfindungsgemäßen Universalpigmentpräparationen (P) und Vergleichsbeispiele mit marktüblichen Anreibeharzen (VG P)

| | **P1** | **P2** | **P3** | **P4** | **P5** | **P6** | **P7** | **P8** | **P9** | **VG P1** | **VG P2** | **VG P3** | **VG P4** | **VG P5** | **VG P6** |
|---|---|---|---|---|---|---|---|---|---|---|---|---|---|---|---|
| **a1-2** | 17,2 | 17,5 | 11 | 17,2 | 17,5 | 11 | | | | | | | | | |
| **a1-1** | | | | | | | 17,2 | 17,5 | 11 | | | | | | |
| **a2-2** | 25,6 | 26,2 | 16,4 | | | | 25,6 | 26,2 | 16,4 | 25 | 25,5 | 10,5 | 25 | 25,5 | 10,5 |
| **a2-1** | | | | 25,6 | 26,2 | 16,4 | | | | | | | | | |
| TEGO® VariPlus TC | | | | | | | | | | 16,7 | 17 | 15,8 | | | |
| Laropal A81 | | | | | | | | | | | | | 16,7 | 17 | 15,8 |
| TEGO® Dispers 656 | | | | | | | | | | | 1,2 | 1,1 | | 1,2 | 1,1 |
| TEGO® Dispers 650 | | | | | | | | | | 1,1 | | | 1,1 | | |
| Dimethylaminoethanol | 0,2 | 0,3 | 0,1 | 0,2 | 0,3 | 0,1 | 0,2 | 0,3 | 0,1 | 0,2 | 0,3 | 0,1 | 0,2 | 0,3 | 0,1 |
| Heliogenblau L7085 | 7 | | | 7 | | | 7 | | | 7 | | | 7 | | |
| Spezial Schwarz 4 | | 6 | | | 6 | | | 6 | | | 6 | | | 6 | |
| Bayferrox® 130 M | | | 22,5 | | | 22,5 | | | 22,5 | | | 22,5 | | | 22,5 |
| Gesamt | 50 | 50 | 50 | 50 | 50 | 50 | 50 | 50 | 50 | 50 | 50 | 50 | 50 | 50 | 50 |
| herstellbar | ja | ja | ja | ja | ja | ja | ja | ja | ja | ja | ja | nein | ja | ja | nein |
| Viskosität bei 100 1/s in mPas | 1885 | 3214 | 1412 | 1940 | 2392 | 1146 | 2084 | 830 | 1179 | 4576 | 5035 | | 6869 | 8283 | |

Alle erfindungsgemäßen Universalpigmentpräparationen P1-P9 konnten hergestellt werden. Die Vergleichspräparationen VG P1-VG P6 zeigten eine deutlich höhere Viskosität und damit eine eingeschränkte Fließfähigkeit oder konnten gar nicht hergestellt werden.

**4. Überprüfung der universellen Verwendbarkeit der erfindungsgemäßen Universalpigmentpräparationen in verschiedenen Lacksystemen**

Zur Überprüfung der universellen Einsetzbarkeit der erfindungsgemäßen Universalpigmentpräparationen und der Vergleichspräparationen werden diese zur Abtönung verschiedener konventioneller (lösungsmittelhaltiger) und wässriger Lacksysteme verwendet. Marktüblich ist eine Prüfung der Verwendbarkeit anhand des Aussehens, anhand der Farbstärke und zuletzt anhand des so genannten RubOut Wertes ($\Delta E$). Zur Ermittlung des RubOut Wertes wird nach dem Applizieren des Lackes und kurz vor der Durchtrocknung eine kleine Fläche mit dem Finger gerieben. An dieser Stelle werden die Pigmente erneut aufgerührt. Idealerweise entsteht zwischen der geriebenen und der ungeriebenen Fläche kein Unterschied. Für diese Erfindung wurden Farbstärke und RubOut Wert relativ zueinander betrachtet.

Es wurden vier verschiedene weiße Basislacke verwendet, die jeweils mit den erfindungsgemäßen Universalpigmentpräparationen P vermischt werden. Die Formulierungen sind im Folgenden beschrieben:

**4.1 Herstellung eines eingefärbten Basislacks 1 auf Basis eines wässrigen 2K PU Acrylat System**

4.1.1 Zunächst werden ein Klarlack 1 gemäß Tabelle 3 und eine Weißpaste 1 gemäß Tabelle 4 hergestellt.

**Tabelle 3:** Rezeptur für Klarlack 1

| | Anteil (g) |
|---|---|
| Bayhydrol A 145 | 58,3 |
| Dimethylaminoethanol (20% in $H_2O$) | 1,4 |
| VE-Wasser | 15,3 |

**Tabelle 4:** Rezeptur für Weißpaste 1

| | Anteil (g) |
|---|---|
| VE-Wasser | 18,4 |
| TEGO Dispers 755 W | 10 |
| TEGO Foamex 830 | 1 |
| Aerosil 200 | 0,5 |
| Kronos 2310 | 70 |
| Parmetol K40 | 0,1 |

Zur Herstellung des Basislacks 1 werden 65,2 Teile des Klarlacks 1 unter Rühren mit 34,8 Teile der Weißpaste 1 abgemischt.

4.1.2 Herstellung eines eingefärbten Basislacks 1

Der weiße Basislack 1 wird in einem PE-Becher vorgelegt und die erfindungsgemäße Universalpigmentpräparation P gemäß Tabelle 6 - 8 zudosiert. Anschließend wird im Speedmixer 1 min bei 2000 U/min homogenisiert. Der Härter 1 wird zugegeben und weitere 1 min bei 2000 U/min gemischt. Die erhaltenen Lacke werden mit Hilfe eines Kastenrakels mit 150 $\mu$m Nassschichtdicke auf Glasplatten appliziert. Nach kurzer Antrocknung wird die RubOut-Prüfung durch Verreiben des applizierten Lackes mit dem Finger durchgeführt. Anschließend werden die erhaltenen Lackaufzüge für 24 h bei Raumtemperatur getrocknet und danach noch für 2 h bei 80 °C gehärtet.

Zur Aushärtung wird ein Isocyanathärter (Härter 1) nach folgender Formulierung verwendet:

**Tabelle 5:** Rezeptur für Härter 1

| | Anteil (g) |
|---|---|
| Bayhydur3100 | 8 |
| Methoxypropylacetat | 2 |

**Tabelle 6:** Rezeptur für blau eingefärbter Basislack 1

| | Anteil (g) |
|---|---|
| weißer Basislack 1 | 8,22 |
| Härter 1 | 1,78 |
| Universalpigmentpräparation P1, P4 oder P7 | 0,57 |

**Tabelle 7:** Rezeptur für schwarz eingefärbter Basislack 1

| | Anteil (g) |
|---|---|
| weißer Basislack 1 | 8,22 |
| Härter 1 | 1,78 |
| Universalpigmentpräparation P2, P5 oder P8 | 0,67 |

**Tabelle 8:** Rezeptur für rot eingefärbter Basislack 1

| | Anteil (g) |
|---|---|
| weißer Basislack 1 | 8,22 |
| Härter 1 | 1,78 |
| Universalpigmentpräparation P3, P6 oder P9 | 0,45 |

**4.2 Herstellung eines eingefärbten Basislacks 2 auf Basis eines wässrigen 1K Styrolacrylats**

4.2.1 Zunächst werden ein Klarlack 2 gemäß Tabelle 9 und eine Weißpaste 2 gemäß Tabelle 10 hergestellt.

**Tabelle 9:** Rezeptur für Klarlack 2

| | Anteil (g) |
|---|---|
| Revacryl AE 6030 | 76,2 |
| TEGO Foamex 855 (25%ig) | 0,6 |
| Butylglykol | 5,5 |
| vormischen und mit Ammoniak pH auf 8,5 einstellen | |
| Millicarb OG | 8,7 |
| Finntalc M 15 | 5,6 |
| TEGO ViskoPlus 3060 | 1,5 |
| TEGO Foamex 855 (25%ig) | 0,6 |
| Testbenzin | 1,3 |

(fortgesetzt)

| | Anteil (g) |
|---|---|
| mit Ammoniak pH auf 8,5 einstellen | |

**Tabelle 10:** Rezeptur für Weißpaste 2

| | Anteil (g) |
|---|---|
| VE-Wasser | 18,4 |
| TEGO Dispers 755 W | 10 |
| TEGO Foamex 830 | 1 |
| Aerosil 200 | 0,5 |
| Kronos 2310 | 70 |
| Parmetol K40 | 0,1 |

Zur Herstellung des Basislacks 2 werden 71,4 Teile des Klarlacks 2 unter Rühren mit 28,6 Teile der Weißpaste 2 abgemischt.

4.2.2 Herstellung eines eingefärbten Basislacks 2

Der weiße Basislack 2 wird in einem PE-Becher vorgelegt und die Universalpigmentpräparation P gemäß Tabellen 11 - 13 zudosiert. Anschließend wird im Speedmixer 1 min bei 2000 U/min homogenisiert. Die erhaltenen Lacke werden mit Hilfe eines Kastenrakels mit 150 μm Nassschichtdicke auf Glasplatten appliziert. Nach kurzer Antrocknung wird die RubOut-Prüfung durch Verreiben des applizierten Lackes mit dem Finger durchgeführt. Anschließend werden die erhaltenen Lackaufzüge für 24 Stunden bei Raumtemperatur getrocknet und danach noch für 2 h bei 80 °C gehärtet.

**Tabelle 11:** Rezeptur blau eingefärbter Basislack 2

| | Anteil (g) |
|---|---|
| weißer Basislack 2 | 10,00 |
| Universalpigmentpräparation P1, P4 oder P7 | 0,57 |

**Tabelle 12:** Rezeptur schwarz eingefärbter Basislack 2

| | Anteil (g) |
|---|---|
| weißer Basislack 2 | 10,00 g |
| Universalpigmentpräparation P2, P5 oder P8 | 0,67 g |

**Tabelle 13:** Rezeptur rot eingefärbter Basislack 2

| | Anteil (g) |
|---|---|
| weißer Basislack 2 | 10,00 g |
| Universalpigmentpräparation P3, P6 oder P9 | 0,45 g |

**4.3 Herstellung eines eingefärbten Basislacks 3**

4.3.1 Der Basislack 3 ist ein handelsüblicher weißer Alkydharzlack "Impredur Hochglanzlack 840" der Firma Brillux.

4.3.2 Herstellung eines eingefärbten Basislacks 3

Der weiße Basislack 3 wird in einem PE-Becher vorgelegt und die Universalpigmentpräparation P gemäß Tabellen 14 - 16 zudosiert. Anschließend wird im Speedmixer 1 min bei 2000 U/min homogenisiert. Die erhaltenen Lacke werden mit Hilfe eines Kastenrakels mit 150 μm Nassschichtdicke auf Glasplatten appliziert. Nach kurzer Antrocknung wird die RubOut-Prüfung durch Verreiben des applizierten Lackes mit dem Finger durchgeführt. Anschließend werden die erhaltenen Lackaufzüge für 24 Stunden bei Raumtemperatur getrocknet und danach noch für 2 h bei 80 °C gehärtet.

**Tabelle 14:** Rezeptur blau eingefärbter Basislack 3

| | Anteil (g) |
|---|---|
| weißer Basislack 3 | 10,00 |
| Universalpigmentpräparation P1, P4 oder P7 | 0,57 |

**Tabelle 15:** Rezeptur schwarz eingefärbter Basislack 3

| | Anteil (g) |
|---|---|
| weißer Basislack 3 | 10,00 |
| Universalpigmentpräparation P2, P5 oder P8 | 0,67 |

**Tabelle 16:** Rezeptur rot eingefärbter Basislack 3

| | Anteil (g) |
|---|---|
| weißer Basislack 3 | 10,00 |
| Universalpigmentpräparation P3, P6 oder P9 | 0,45 |

**4.4 Herstellung eines eingefärbten Basislacks 4 auf Basis eines lösungsmittehaltigen 2K PU Polyesterpolyol Systems**

4.4.1 Es wird ein weißer Basislack 4 gemäß Tabelle 17 hergestellt.

**Tabelle 17:** Rezeptur für weißer Basislack 4

| | Anteil (g) |
|---|---|
| Setal 1603 | 20 |
| TEGO Airex 990 | 0,1 |
| TEGO Dispers 628 | 1,8 |
| Kronos 2310 | 30 |
| Blanc Fixe Micro | 29 |
| Finntalk M 15 | 3 |
| Butylacetat | 4,5 |
| Dispergieren im Skandex für 1h | |
| TEGO Glide 110 | 0,5 |

(fortgesetzt)

| Dispergieren im Skandex für 1h | |
|---|---|
| Solvent Naphta 170 (Hydrosol A170) | 0,5 |
| TIB KAT 716 1% in BA | 4 |
| Butyldiglykolacetat | 0,5 |
| Setal 1603 | 6,1 |

Zur Aushärtung wird ein Isocyanathärter (Härter 2) nach folgender Formulierung verwendet:

**Tabelle 18:** Rezeptur für Härter 2

| | Anteil (g) |
|---|---|
| Desmodur N3600 | 9 |
| Butylacetat | 1 |

4.4.2 Herstellung eines eingefärbten Basislacks 4

Der weiße Basislack 4 wird in einem PE-Becher vorgelegt und die Universalpigmentpräparation P gemäß Tabellen 19 - 21 zudosiert. Anschließend wird im Speedmixer 1 min bei 2000 U/min homogenisiert. Der Härter wird zugegeben und weitere 1 min bei 2000 U/min gemischt. Die erhaltenen Lacke werden mit Hilfe eines Kastenrakels mit 150 $\mu$m Nassschichtdicke auf Glasplatten appliziert. Nach kurzer Antrocknung wird die RubOut-Prüfung durch Verreiben des applizierten Lackes mit dem Finger durchgeführt. Anschließend werden die erhaltenen Lackaufzüge für 24 h bei Raumtemperatur getrocknet und danach noch für 2 h bei 80 °C gehärtet.

**Tabelle 19:** Rezeptur blau eingefärbter Basislack 4

| | Anteil (g) |
|---|---|
| weißer Basislack 4 | 8,60 |
| Härter 2 | 1,40 |
| Universalpigmentpräparation P1, P4 oder P7 | 0,75 |

**Tabelle 20:** Rezeptur schwarz eingefärbter Basislack 4

| | Anteil (g) |
|---|---|
| weißer Basislack 4 | 8,60 |
| Härter 2 | 1,40 |
| Universalpigmentpräparation P2, P5 oder P8 | 0,86 |

**Tabelle 21:** Rezeptur rot eingefärbter Basislack 4

| | Anteil (g) |
|---|---|
| weißer Basislack 4 | 8,60 |
| Härter 2 | 1,40 |
| Universalpigmentpräparation P1, P4 oder P7 | 0,58 |

**5. Herstellung der Vergleichsbeispiele VG P7 bis VG P12**

Die erfindungsgemäße Basislacke 1 - 4 werden mit marktüblichen Pigmentpräparationen auf Wasserbasis (VG

P7, VG P9, VG P11) bzw. auf Lösungsmittel-Basis (VG P8, VG P10, VG P12), hergestellt nach Tabelle 22, verglichen:

**Tabelle 22:** Herstellung von Vergleichsbeispiele

| | VG P7 | VG P8 | VG P9 | VG P10 | VG P11 | VG P12 |
|---|---|---|---|---|---|---|
| Laropal A81 (60 % in MPA) | | 15,2 | | 15 | 5 | |
| TEGO®VariPlus DS 50 | 20,8 | | 13,8 | | | 9,5 |
| TEGO® Dispers 670 | | | | 7,8 | | 2 |
| TEGO® Dispers 656 | | 2,5 | | | | 0,9 |
| TEGO® Dispers 750 W | 7,5 | | 6,6 | | 4 | |
| TEGO® Foamex 810 | 0,5 | | 0,5 | | 0,5 | |
| 2-Amino-2-methyl-1-propanol | | | 0,2 | | 0,1 | |
| Heliogenblau L7085 | 12,5 | 12,5 | | | | |
| Spezial Schwarz 4 | | | 11 | 12,5 | | |
| Bayferrox 130 M | | | | | 30 | 32,5 |
| Wasser | 8,7 | | 17,9 | | 10,4 | |
| Methoxypropylacetat | | 19,8 | | 14,7 | | 5,1 |
| Gesamt | 50 | 50 | 50 | 50 | 50 | 50 |

Alle flüssigen Komponenten wurden vorgelegt und kurz mit einem Metallspatel per Hand homogenisiert. Anschließend wurde das Pigment zugewogen und erneut per Hand homogenisiert. Es wurde eine definierte Menge Glasperlen hinzugegeben und nach der in Tabelle 1 angegebenen Dispergierdauer in einem Speedmixer der Firma Hauschild bei einer Drehzahl von 2000 U/min dispergiert. Die so erhaltenen Pigmentpräparationen wurden über 250 Nylon Schnellsiebe abgesiebt.

**6. Beurteilung des Einfärbevermögens**

Die Beurteilung des Einfärbevermögens der eingefärbten Basislacke 1 - 4 erfolgt anhand der Messung der Farbstärke und der Stärke des RubOuts (ΔE). Dabei werden mit Hilfe des Farbmessgerätes SP-62 der Firma X-Rite die Lab*-Werte der geriebenen Fläche sowie der nicht geriebenen Fläche vermessen und verglichen. Der Farbtonunterschied ΔE von geriebener zu nicht geriebener Fläche berechnet sich gemäß Formel (III):

$$\Delta E = \sqrt{(L^*_{RB} - L^*_0)^2 + (a^*_{RB} - a^*_0)^2 + (b^*_{RB} - b^*_0)^2} \qquad \text{Formel (III)}$$

Die Farbstärke F berechnet sich, angelehnt an Kubelka/Munk über den Hellbezugswert Y nach Formel (IV) und (V):

$$Y = \left(\frac{L^*_0 + 16}{116}\right)^3 \cdot 100 \qquad \text{Formel (IV)}$$

$$F = \frac{(100 - Y)^2}{2 \cdot Y} \qquad \text{Formel (V)}$$

**Tabelle 23: Ergebnisse des Einfärbevermögens wässriger und lösungsmittelhaltiger Basislacke mit Heliogenblau L7085**

| | | P1 | P4 | P7 | VG P1 | VG P4 | VG P7 | VG P8 |
|---|---|---|---|---|---|---|---|---|
| **Basislack 1** | **Farbstärke** | 47,82 | 48,10 | 48,60 | 17,57 | 20,69 | 38,04 | - |
| | **ΔE** | 1,68 | 0,6 | 1,24 | 20,4 | 17,42 | 4,87 | - |
| | **Verträglichkeit optisch** | verträglich | verträglich | verträglich | unverträglich | unverträglich | verträglich | nicht mischbar |
| **Basislack 2** | **Farbstärke** | 53,04 | 53,80 | 0,78 | 26,57 | 3,95 | 46,22 | - |
| | **ΔE** | 1,75 | 0,6 | 1,13 | 16,29 | 6,48 | 2,81 | - |
| | **Verträglichkeit optisch** | verträglich | verträglich | verträglich | unverträglich | unverträglich | verträglich | nicht mischbar |
| **Basislack 3** | **Farbstärke** | 50,37 | 51,43 | 59,16 | 37,63 | 2,99 | - | 48,13 |
| | **ΔE** | 3,67 | 2,5 | 2,24 | 38,28 | 1,94 | - | 4,61 |
| | **Verträglichkeit optisch** | verträglich | verträglich | verträglich | verträglich | verträglich | nicht misch bar | verträglich |
| **Basislack 4** | **Farbstärke** | 41,96 | 41,11 | 41,11 | 41,21 | 41,93 | - | 38,69 |
| | **ΔE** | 1,65 | 1,01 | 1,41 | 0,96 | 0,97 | - | 1,97 |
| | **Verträglichkeit optisch** | verträglich | verträglich | verträglich | verträglich | verträglich | nicht misch bar | verträglich |

**Tabelle 24: Ergebnisse des Einfärbevermögens verschiedener wässriger und lösungsmittelhaltiger Basislacke mit schwarzem Pigment**

| | | P2 | P5 | P8 | VG P2 | VG P5 | VG P9 | VG P10 |
|---|---|---|---|---|---|---|---|---|
| **Basislack 1** | **Farbstärke** | 170,67 | 152,79 | 179,13 | 24,47 | 26,19 | 173,60 | - |
| | ΔE | 1,5 | 2,56 | 0,36 | 26,8 | 26,07 | 1,56 | - |
| | **Verträglichkeit optisch** | verträglich | verträglich | verträglich | unverträglich | unverträglich | verträglich | nicht mischbar |
| **Basislack 2** | **Farbstärke** | 187,38 | 177,28 | 188,58 | 96,06 | 71,77 | 190,46 | - |
| | ΔE | 1,3 | 1,27 | 0,10 | 2,35 | 14,9 | 0,31 | - |
| | **Verträglichkeit optisch** | verträglich | verträglich | verträglich | unverträglich | unverträglich | verträglich | nicht mischbar |
| **Basislack 3** | **Farbstärke** | 190,87 | 206,19 | 221,58 | 190,26 | 188,73 | - | 218,99 |
| | ΔE | 1,73 | 1 | 0,10 | 0,87 | 1,88 | - | 1,32 |
| | **Verträglichkeit optisch** | verträglich | verträglich | verträglich | verträglich | verträglich | nicht mischbar | verträglich |
| **Basislack 4** | **Farbstärke** | 133,19 | 122,82 | 128,05 | 130,24 | 137,20 | - | 102,59 |
| | ΔE | 2,19 | 2,2 | 1,58 | 0,37 | 0,8 | - | 6,24 |
| | **Verträglichkeit optisch** | verträglich | verträglich | verträglich | verträglich | verträglich | nicht mischbar | verträglich |

**Tabelle 25: Ergebnisse des Einfärbevermögens verschiedener wässriger und lösungsmittelhaltiger Basislacke mit Bayferrox 130 M**

| | | P3 | P6 | P9 | VG P11 | VG P12 |
|---|---|---|---|---|---|---|
| **Basislack 1** | **Farbstärke** | 46,63 | 44,45 | 51,15 | 49,12 | - |
| | ΔE | 1,82 | 1,48 | 0,46 | 2,75 | - |
| | **Verträglichkeit optisch** | verträglich | verträglich | verträglich | verträglich | nicht mischbar |
| **Basislack 2** | Farbstärke | 53,64 | 58,91 | 54,09 | 58,04 | - |
| | ΔE | 0,79 | 1,63 | 0,38 | 0,85 | - |
| | **Verträglichkeit optisch** | verträglich | verträglich | verträglich | verträglich | nicht mischbar |
| **Basislack 3** | Farbstärke | 52,48 | 49,06 | 59,16 | - | 54,98 |
| | ΔE | 1,02 | 1,48 | 0,54 | - | 0,38 |
| | **Verträglichkeit optisch** | verträglich | verträglich | verträglich | nicht mischbar | verträglich |
| **Basislack 4** | **Farbstärke** | 40,78 | 40,42 | 39,38 | - | 39,91 |
| | ΔE | 1,83 | 0,53 | 0,84 | - | 1,57 |
| | **Verträglichkeit optisch** | verträglich | verträglich | verträglich | nicht mischbar | verträglich |

Aus den in Tabelle 23 bis Tabelle 25Tabelle gezeigten Ergebnissen ist klar abzulesen, dass die Basislacke mit den erfindungsgemäßen Universalpigmentpräparationen eine universelle Verträglichkeit in allen Lacksystemen aufweisen. Dazu werden sowohl das optische Aussehen herangezogen als auch die Farbstärke und die Höhe des ΔE Wertes relativ zueinander verglichen. Die Vergleichsbeispiele auf Basis der handelsüblichen Harze (VG P1 bis VG P6) zeigen eine gute Verträglichkeit in den lösungsmittelhaltigen Systemen, versagen jedoch im wässrigen Bereich. Die marktüblichen Pigmentpräparationen VG P7 bis VG P12 sind aufgrund ihres Lösungsmittel- bzw. Wassergehaltes nicht universell einsetzbar. Verglichen im jeweiligen Medium zeigt sich, dass die Basislacke mit den erfindungsgemäßen Universalpigmentpräparationen sehr ähnliche oder sogar bessere Ergebnisse liefern.

**Tabelle 26:** Verwendete Materialien

| Materialien | Firma | |
|---|---|---|
| Aerosil 200 | Evonik Industries AG | Füllstoff |
| Bayferrox® 130 M | Fa. Lanxess | Pigment |
| Bayhydrol A 145 | Fa. Covestro | Bindemittel |
| Bayhydur 3100 | Fa. Covestro | Härter |
| Blanc Fixe Micro | Fa. Solvay | Füllstoff |
| Desmodur N3600 | Fa. Covestro | Härter |
| Finntalk M 15 | Fa. Mondominerals | Füllstoff |
| Heliogenblau L7085 | Fa. BASF | Pigment |
| Impredur Hochglanzlack 840 | Firma Brillux | Alkydharzlack |
| Kronos 2310 | Fa. Kronos | Pigment |
| Laropal A81 | Fa. BASF | Bindemittel |
| Laropal A81 (60 % in MPA) | Fa. BASF | Bindemittel, selbst verdünnt |
| Millicarb OG () | Fa. Omya | Füllstoff |

(fortgesetzt)

| Materialien | Firma | |
|---|---|---|
| Parmetol K40 | Fa. Schülke | Konservierungsmittel |
| Revacryl AE 6030 | Fa. Synthomer | Bindemittel |
| Setal 1603 () | Fa. Nuplex | Bindemittel |
| Solvent Naphta 170 (Hydrosol A170) | Fa. DHC Solvent Chemie | flüchtiges organisches Lösungsmittel |
| Spezial Schwarz 4 | Fa. Orion Engineered Carbons | Pigment |
| TEGO® Airex 990 | Evonik Industries AG | Entlüfter |
| TEGO® Dispers 628 | Evonik Industries AG | Dispergiermittel |
| TEGO® Dispers 650 | Evonik Industries AG | Dispergiermittel |
| TEGO® Dispers 656 | Evonik Industries AG | Dispergiermittel |
| TEGO® Dispers 656 | Evonik Industries AG | Dispergiermittel |
| TEGO® Dispers 670 | Evonik Industries AG | Dispergiermittel |
| TEGO® Dispers 750 W) | Evonik Industries AG | Dispergiermittel |
| TEGO® Dispers 755 W | Evonik Industries AG | Dispergiermittel |
| TEGO® Foamex 810 | Evonik Industries AG | Entschäumer |
| TEGO® Foamex 830 | Evonik Industries AG | Entschäumer |
| TEGO® Foamex 855 (25%ig) | Evonik Industries AG | Entschäumer |
| TEGO® Glide 110 | Evonik Industries AG | Oberflächenadditiv |
| TEGO® VariPlus DS 50 | Evonik Industries AG | Bindemittel |
| TEGO® ViskoPlus 3060 | Evonik Industries AG | Verdicker |
| TEGO® VariPlus TC | Evonik Industries AG | Bindemittel |
| TIB KAT 716 1% in BA | Fa. TIB Chemicals | Härtungskatalysator |

**7. Nichtflüchtiger Anteil** der **erfindungsgemäßen Universalpigmentpräparationen**

Der nichtflüchtige Anteil (nfA) der erfindungsgemäßen Universalpigmentpräparationen mit Heliogenblau L7085 wird durch Trocknung der Probe bestimmt. Dazu wird eine Probenmenge von ca. 1 g auf 1 mg genau in ein Aluminiumschälchen mit einem Durchmesser von 6 cm eingewogen, dieses bei 130 °C für 2 h im Ofen getrocknet und anschließend wiederum gewogen. Der absolute Verlust wird bestimmt und daraus der nicht flüchtige Anteil in Prozent berechnet. Je höher der Prozentwert ist, desto weniger flüchtige Substanzen werden in das Raumklima abgegeben.

**Tabelle 27:** Nicht flüchtiger organischer Anteil der erfindungsgemäßen Universalpigmentpräparationen

| Pigmentpräparationen | nfA in % |
|---|---|
| P1 | 97,0 |
| P4 | 96,1 |
| P7 | 97,1 |
| VG P8 | 48,2 |

Der nicht flüchtige Anteil (nfA) der erfindungsgemäßen Universalpigmentpräparationen liegt deutlich über 90 %. Sie enthalten somit nur einen sehr geringen Anteil an flüchtigen organischen Bestandteilen.

## Patentansprüche

**1.** Universalpigmentpräparation enthaltend

- ein flockungsstabilisierendes Medium umfassend

  (a1) Umsetzungsprodukte von Di- oder Polycarbonsäuren sowie deren Anhydride und/oder Ester oder Hydroxycarbonsäuren mit Di- oder Polyolen und
  (a2) Umsetzungsprodukte von Alkylenoxiden mit alkoxylierbaren Verbindungen, und

- mindestens ein Pigment.

**2.** Universalpigmentpräparation nach Anspruch 1, **dadurch gekennzeichnet, dass** das Gewichtsverhältnis von flockungsstabilisierendem Medium zu Pigment 95:5 bis 5:95, bevorzugt 90:10 bis 10:90, besonders bevorzugt 85:15 bis 15:85 beträgt.

**3.** Universalpigmentpräparation nach Anspruch 1, **dadurch gekennzeichnet, dass** das Gewichtsverhältnis von Umsetzungsprodukten (a1) zu Umsetzungsprodukten (a2) 10:90 bis 90:10, bevorzugt 20:80 bis 80:20, besonders bevorzugt 40:60 bis 60:40 beträgt.

**4.** Universalpigmentpräparation nach Anspruch 1, **dadurch gekennzeichnet, dass** es sich bei den Di- oder Polycarbonsäuren um gesättigte und/oder ungesättigte und/oder aromatische Di- oder Polycarbonsäuren sowie deren Anhydride oder Ester handelt.

**5.** Universalpigmentpräparation nach Anspruch 4, **dadurch gekennzeichnet, dass** es sich bei den Di- oder Polycarbonsäuren um Mischungen aus gesättigten und $\alpha$, $\beta$-ungesättigten Di- oder Polycarbonsäuren im molaren Verhältnis von 1:99 bis 99:1, bevorzugt 80:20 bis 40:60, besonders bevorzugt 70:30 bis 60:40, handelt.

**6.** Universalpigmentpräparation nach Anspruch 4, **dadurch gekennzeichnet, dass** es sich bei den Di- oder Polycarbonsäuren um Citracon-, Fumar-, Itacon-, Malein- und/oder Mesaconsäure, Phthalsäure, Isophthalsäure, Terephthalsäure, 1,4-Cyclohexandicarbonsäure, Malonsäure, Bernsteinsäure, Glutarsäure, Methyltetra-, Methylhexahydrophthalsäure, Hexahydrophthalsäure, Tetrahydrophthalsäure, Dodecandisäure, Pimelinsäure, Adipinsäure, Azelainsäure, Korksäure, Sebacinsäure, , Pyromellitsäure und/oder Trimellitsäure oder deren Anhydride oder Ester oder Mischungen daraus handelt.

**7.** Universalpigmentpräparation nach Anspruch 1, **dadurch gekennzeichnet, dass** es sich bei den Di- oder Polyolen um Polyalkylenglykole der Formel (I)

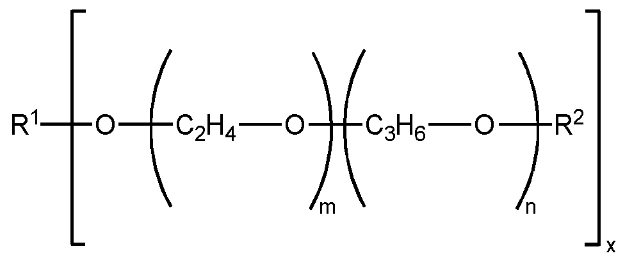

Formel (I)

mit
x = 1, 2, 3, 4 bis 10 mit der Maßgabe:

im Falle von x = 1 sind die Reste $R^1$ und $R^2$ Wasserstoff,
im Falle von x = 2, 3, 4 bis 10 der Rest $R^1$ ein linearer oder verzweigter, gesättigter, einfach oder mehrfach ungesättigter aliphatischer, cycloaliphatischer oder aromatischer Kohlenwasserstoffrest mit 2 bis 50 Kohlenstoffatomen, bevorzugt mit 3 bis 30 Kohlenstoffatomen ist, der von Heteroatomen wie Sauerstoff, Stickstoff oder Schwefel unterbrochen sein kann, und $R^2$ ein Wasserstoff ist, wobei die in einer Anzahl von x an $R^1$ angebundenen Segmente gleich oder unterschiedlich aufgebaut sein können,
m = 0, 1, 2, 3 bis 100, bevorzugt 0, 1, 2, 3 bis 35,

n = 0, 1, 2, 3 bis 100, bevorzugt 0, 1, 2, 3 bis 30,
mit der Maßgabe, dass das Produkt x*(m+n) = 2, 3, 4 bis 100 beträgt, bevorzugt 2, 3, 4 bis 35, handelt.

**8.** Universalpigmentpräparation nach Anspruch 7, **dadurch gekennzeichnet, dass** die Wiederholeinheiten $(-C_2H_4-O-)_m$ und $(-C_3H_6-O-)_n$ blockartig, statistisch verteilt oder in einer Gradientenverteilung in der Polymerkette angeordnet sind.

**9.** Universalpigmentpräparation nach Anspruch 7, **dadurch gekennzeichnet, dass** es sich bei den Polyalkylenglykolen um Polypropylenglykole oder Polypropylen-Polyethylenglykole mit einer zahlenmittleren Molmasse von 100 bis 2000 g/mol, bevorzugt von 140 bis 1500 g/mol, besonders bevorzugt von 180 bis 1000 g/mol handelt.

**10.** Universalpigmentpräparation nach Anspruch 1, **dadurch gekennzeichnet, dass** die Umsetzungsprodukte (a1) eine OH-Zahl zwischen 1 und 450 mg KOH/g, bevorzugt zwischen 10 und 200 mg KOH/g und besonders bevorzugt zwischen 20 und 130 mg KOH/g aufweisen.

**11.** Universalpigmentpräparation nach Anspruch 10, **dadurch gekennzeichnet, dass** die Umsetzungsprodukte (a1) einen theoretischen Doppelbindungsgehalt von 0 bis 3 mmol/g, bevorzugt 0 bis 2 mmol/g, besonders bevorzugt 0,1 bis 0,7 mmol/g aufweist.

**12.** Universalpigmentpräparation nach Anspruch 1, **dadurch gekennzeichnet, dass** die Umsetzungsprodukte (a2) durch eine Alkoxylierungsreaktion von alkoxylierbaren Verbindungen der Formel (II)

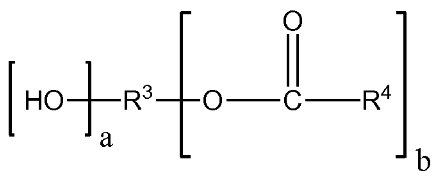

Formel (II),

wobei

$R^3$ ein linearer oder verzweigter, gesättigter, einfach oder mehrfach ungesättigter aliphatischer, cycloaliphatischer oder aromatischer Kohlenwasserstoffrest mit 2 bis 50 Kohlenstoffatomen, bevorzugt mit 3 bis 30 Kohlenstoffatomen ist, der von Heteroatomen wie Sauerstoff, Stickstoff oder Schwefel unterbrochen sein kann,
$R^4$ ein linearer oder verzweigter, gesättigter, einfach oder mehrfach ungesättigter aliphatischer, cycloaliphatischer oder aromatischer Kohlenwasserstoffrest, der von Heteroatomen wie Sauerstoff, Stickstoff oder Schwefel unterbrochen und mit OH-Gruppen substituiert sein kann mit 1 bis 22 Kohlenstoffatomen, bevorzugt mit 6 bis 20 Kohlenstoffatomen ist,
a = 1 bis 8, bevorzugt 2 bis 6,
b = 0 bis 7, bevorzugt 1 bis 4, besonders bevorzugt kleiner oder gleich 3, mit der Maßgabe, dass die Summe aus a und b = 2 bis 8, bevorzugt 3 bis 6, besonders bevorzugt kleiner als 6 ist,

mit Alkyleoxiden hergestellt werden.

**13.** Universalpigmentpräparation nach Anspruch 1, **dadurch gekennzeichnet, dass** es sich bei den alkoxylierbaren Verbindungen um Diole, Polyole, Ethylenglykol, Diethylengykol, Polyethylenglykol, Propylenglykol, Dipropylenglykol, Polypropylenglykol, Polyetherole, Hexandiol, Butandiol, Neopentylglykol, Hexylenglykol, Ricinolsäure, Hydroxystearinsäure und Polyhydroxystearinsäure, Glycerin, Polyglycerin, Pentaerythrit, Trimethylolpropan, mehrfach OH-funktionelle Phenole wie Novolake oder Polyphenole, Sorbitol, Sorbitan, Isosorbid, Mannit und Zucker wie Glucose, Saccharose sowie deren Ester und Fettsäure wie Ölsäure, Laurinsäure, Stearinsäure, vorzugsweise Hydroxystearinsäure, Glycerin, Polyglycerin, Pentaerythrit, Trimethylolpropan und Fettsäureester des Sorbitans handelt.

**14.** Universalpigmentpräparation nach Anspruch 1, **dadurch gekennzeichnet, dass** es sich bei den Alkylenoxiden um Ethylenoxid, Propylenoxid, Butylenoxid und/oder Styroloxid, bevorzugt Ethylenoxid und/oder Propylenoxid handelt.

**15.** Universalpigmentpräparation nach Anspruch 1, **dadurch gekennzeichnet, dass** die Umsetzungsprodukte (a2) eine gewichtsmittlere Molmasse von 300 bis 15 000 g/mol, bevorzugt von 400 bis 5 000 g/mol und besonders bevorzugt von 500 bis 2800 g/mol aufweisen.

**16.** Universalpigmentpräparation nach Anspruch 1, **dadurch gekennzeichnet, dass** es sich bei den Pigmenten um organische, anorganische Pigmente oder Rußpigmente handelt.

**17.** Universalpigmentpräparation nach Anspruch 1 enthaltend

- 0,5 bis 85,5 Gew.-% von Umsetzungsprodukte (a1),
- 0,5 bis 85,5 Gew.-% von Umsetzungsprodukte (a2) und
- 5 bis 95 Gew.-% mindestens eines Pigmentes, ausgewählt aus der Gruppe der organischen, anorganischen oder Rußpigmente.

**18.** Universalpigmentpräparation nach Anspruch 17, **dadurch gekennzeichnet, dass** Dispergieradditive und/oder weitere Hilfskomponenten zugesetzt werden.

**19.** Universalpigmentpräparation nach Anspruch 18, **dadurch gekennzeichnet, dass** der volatile organische Anteil bei < 20 Gew.-%, bevorzugt < 10 Gew.-%, besonders bevorzugt < 5 Gew.-% liegt.

**20.** Universalpigmentpräparation nach Anspruch 19, **dadurch gekennzeichnet, dass** sie bei Raumtemperatur eine fließfähige Konsistenz aufweist.

**21.** Universalpigmentpräparation nach Anspruch 20, **dadurch gekennzeichnet, dass** sie bei 25 °C und 100 1/s eine Viskosität von < 5000 mPas, bevorzugt < 3000 mPas und besonders bevorzugt < 2000 mPas aufweist.

**22.** Universalpigmentpräparation nach Anspruch 21, **dadurch gekennzeichnet, dass** sie kein organisches Lösungsmittel mit einem Siedepunkt unter 250°C und kein Wasser aufweist.

**23.** Flockungsstabilisierendes Medium enthaltend

- 10 bis 90, bevorzugt 20 bis 80, besonders bevorzugt 40 bis 60 Gew.-% von (a1) und
- 90 bis 10, bevorzugt 80 bis 20, besonders bevorzugt 60 bis 40 Gew.-% von (a2).

**24.** Verwendung des flockungsstabilisierenden Mediums nach Anspruch 23 zur Herstellung von Pigmentpräparationen.

**25.** Verwendung der Universalpigmentpräparation nach Anspruch 1 zur Herstellung von Farben, Lacken, Druckfarben, Beschichtungsstoffen, Fußbodenbeschichtungen, Vergussmassen, Spachtelmassen.

**26.** Verfahren zur Herstellung der Universalpigmentpräparation nach Anspruch 1, **dadurch gekennzeichnet, dass** zunächst die Umsetzungsprodukte (a1) und die Umsetzungsprodukte (a2) hergestellt werden und anschließend vermischt werden, wobei keine Zugabe von flüchtigen organischen Lösungsmitteln und/oder Wasser erfolgt, danach die Pigmente beigemengt werden.

## Claims

**1.** Universal pigment preparation comprising

- a flocculation-stabilizing medium comprising

  (a1) reaction products of di- or polycarboxylic acids and the anhydrides and/or esters thereof or hydroxycarboxylic acids with di- or polyols and
  (a2) reaction products of alkylene oxides with alkoxylatable compounds,
  and

- at least one pigment.

2. Universal pigment preparation according to Claim 1, **characterized in that** the weight ratio of flocculation-stabilizing medium to pigment is 95:5 to 5:95, preferably 90:10 to 10:90, more preferably 85:15 to 15:85.

3. Universal pigment preparation according to Claim 1, **characterized in that** the weight ratio of reaction products (a1) to reaction products (a2) is 10:90 to 90:10, preferably 20:80 to 80:20, more preferably 40:60 to 60:40.

4. Universal pigment preparation according to Claim 1, **characterized in that** the di- or polycarboxylic acids are saturated and/or unsaturated and/or aromatic di- or polycarboxylic acids and the anhydrides or esters thereof.

5. Universal pigment preparation according to Claim 4, **characterized in that** the di- or polycarboxylic acids are mixtures of saturated and $\alpha,\beta$-unsaturated di- or polycarboxylic acids in a molar ratio of 1:99 to 99:1, preferably 80:20 to 40:60, more preferably 70:30 to 60:40.

6. Universal pigment preparation according to Claim 4, **characterized in that** the di- or polycarboxylic acids are citraconic, fumaric, itaconic, maleic and/or mesaconic acid, phthalic acid, isophthalic acid, terephthalic acid, cyclohexane-1,4-dicarboxylic acid, malonic acid, succinic acid, glutaric acid, methyltetra- and methylhexahydrophthalic acid, hexahydrophthalic acid, tetrahydrophthalic acid, dodecanedioic acid, pimelic acid, adipic acid, azelaic acid, suberic acid, sebacic acid, pyromellitic acid and/or trimellitic acid or the anhydrides or esters thereof or mixtures thereof.

7. Universal pigment preparation according to Claim 1, **characterized in that** the di- or polyols are polyethylene glycols of the formula (I)

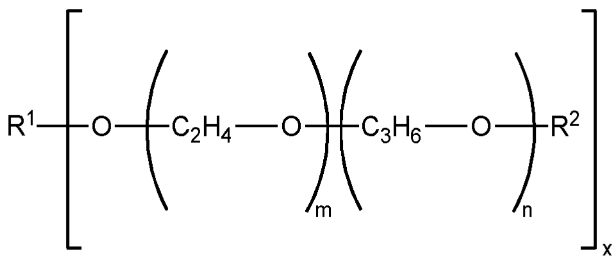

Formula (I)

with
x = 1, 2, 3 or 4 to 10, with the proviso that:

in the case that x = 1 the $R^1$ and $R^2$ radicals are hydrogen,
in the case that x = 2, 3 or 4 to 10 the $R^1$ radical is a linear or branched, saturated or mono- or polyunsaturated aliphatic, cycloaliphatic or aromatic hydrocarbyl radical having 2 to 50 carbon atoms, preferably having 3 to 30 carbon atoms, which may be interrupted by heteroatoms such as oxygen, nitrogen or sulphur, and $R^2$ is a hydrogen, where the segments attached to $R^1$ in a number of x may be of the same or different structure,
m = 0, 1, 2 or 3 to 100, preferably 0, 1, 2 or 3 to 35,
n = 0, 1, 2 or 3 to 100, preferably 0, 1, 2 or 3 to 30,
with the proviso that the product x*(m+n) = 2, 3 or 4 to 100, preferably 2, 3 or 4 to 35.

8. Universal pigment preparation according to Claim 7, **characterized in that** the repeat units $(-C_2H_4-O-)_m$ and $(-C_3H_6-O-)_n$ are arranged in blocks, in random distribution or in a gradient distribution in the polymer chain.

9. Universal pigment preparation according to Claim 7, **characterized in that** the polyalkylene glycols are polypropylene glycols or polypropylene-polyethylene glycols having a number-average molar mass of 100 to 2000 g/mol, preferably of 140 to 1500 g/mol, more preferably of 180 to 1000 g/mol.

10. Universal pigment preparation according to Claim 1, **characterized in that** the reaction products (a1) have an OH number between 1 and 450 mg KOH/g, preferably between 10 and 200 mg KOH/g and more preferably between 20 and 130 mg KOH/g.

11. Universal pigment preparation according to Claim 10, **characterized in that** the reaction products (a1) have a theoretical double bond content of 0 to 3 mmol/g, preferably 0 to 2 mmol/g, more preferably 0.1 to 0.7 mmol/g.

**12.** Universal pigment preparation according to Claim 1, **characterized in that** the reaction products (a2) are prepared by an alkoxylation reaction of alkoxylatable compounds of the formula (II)

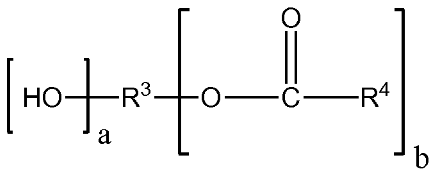

Formula (II)

where

$R^3$ is a linear or branched, saturated or mono- or polyunsaturated, aliphatic, cycloaliphatic or aromatic hydrocarbyl radical having 2 to 50 carbon atoms, preferably having 3 to 30 carbon atoms, which may be interrupted by heteroatoms such as oxygen, nitrogen or sulphur,
$R^4$ is a linear or branched, saturated or mono- or polyunsaturated aliphatic, cycloaliphatic or aromatic hydrocarbyl radical which may be interrupted by heteroatoms such as oxygen, nitrogen or sulphur and may be substituted by OH groups, having 1 to 22 carbon atoms, preferably having 6 to 20 carbon atoms,
a = 1 to 8, preferably 2 to 6,
b = 0 to 7, preferably 1 to 4, more preferably not more than 3, with the proviso that the sum total of a and b = 2 to 8, preferably 3 to 6, more preferably less than 6,

with alkylene oxides.

**13.** Universal pigment preparation according to Claim 1, **characterized in that** the alkoxylatable compounds are diols, polyols, ethylene glycol, diethylene glycol, polyethylene glycol, propylene glycol, dipropylene glycol, polypropylene glycol, polyetherols, hexanediol, butanediol, neopentyl glycol, hexylene glycol, ricinoleic acid, hydroxystearic acid and polyhydroxystearic acid, glycerol, polyglycerol, pentaerythritol, trimethylolpropane, poly-OH-functional phenols such as novolaks or polyphenols, sorbitol, sorbitan, isosorbide, mannitol and sugars such as glucose, sucrose and esters thereof, and fatty acids such as oleic acid, lauric acid, stearic acid, preferably hydroxystearic acid, glycerol, polyglycerol, pentaerythritol, trimethylolpropane and fatty acid esters of sorbitan.

**14.** Universal pigment preparation according to Claim 1, **characterized in that** the alkylene oxides are ethylene oxide, propylene oxide, butylene oxide and/or styrene oxide, preferably ethylene oxide and/or propylene oxide.

**15.** Universal pigment preparation according to Claim 1, **characterized in that** the reaction products (a2) have a weight-average molar mass of 300 to 15 000 g/mol, preferably of 400 to 5000 g/mol and more preferably of 500 to 2800 g/mol.

**16.** Universal pigment preparation according to Claim 1, **characterized in that** the pigments are organic or inorganic pigments or carbon black pigments.

**17.** Universal pigment preparation according to Claim 1, comprising

- 0.5% to 85.5% by weight of reaction products (a1),
- 0.5% to 85.5% by weight of reaction products (a2) and
- 5% to 95% by weight of at least one pigment selected from the group of the organic, inorganic or carbon black pigments.

**18.** Universal pigment preparation according to Claim 17, **characterized in that** dispersing additives and/or further auxiliary components are added.

**19.** Universal pigment preparation according to Claim 18, **characterized in that** the volatile organic component is < 20% by weight, preferably < 10% by weight, more preferably < 5% by weight.

**20.** Universal pigment preparation according to Claim 19, **characterized in that** it has a free-flowing consistency at

room temperature.

21. Universal pigment preparation according to Claim 20, **characterized in that** it has a viscosity at 25°C and 100 1/s of < 5000 mPas, preferably < 3000 mPas and more preferably < 2000 mPas.

22. Universal pigment preparation according to Claim 21, **characterized in that** it does not include any organic solvent having a boiling point below 250°C or any water.

23. Flocculation-stabilizing medium comprising

- 10% to 90%, preferably 20% to 80% and more preferably 40% to 60% by weight of (a1) and
- 90% to 10%, preferably 80% to 20% and more preferably 60% to 40% by weight of (a2).

24. Use of the flocculation-stabilizing medium according to Claim 23 for production of pigment preparations.

25. Use of the universal pigment preparation according to Claim 1 for production of paints, varnishes, printing inks, coating materials, floor coatings, potting compounds and filling compounds.

26. Process for producing the universal pigment preparation according to Claim 1, **characterized in that** the reaction products (a1) and the reaction products (a2) are first produced and then mixed, with no addition of volatile organic solvents and/or water, then the pigments are mixed in.

## Revendications

1. Préparation de pigment universelle, contenant :

- un milieu de stabilisation de la floculation, comprenant :

(a1) des produits de réaction d'acides di- ou polycarboxyliques, ainsi que leurs anhydrides et/ou esters ou d'acides hydroxycarboxyliques avec des di- ou polyols,
et
(a2) des produits de réaction d'oxydes d'alkylène avec des composés alcoxylables,
et

- au moins un pigment.

2. Préparation de pigment universelle selon la revendication 1, **caractérisée en ce que** le rapport en poids entre le milieu de stabilisation de la floculation et le pigment est de 95:5 à 5:95, de préférence de 90:10 à 10:90, de manière particulièrement préférée de 85:15 à 15:85.

3. Préparation de pigment universelle selon la revendication 1, **caractérisée en ce que** le rapport en poids entre les produits de réaction (a1) et les produits de réaction (a2) est de 10:90 à 90:10, de préférence de 20:80 à 80:20, de manière particulièrement préférée de 40:60 à 60:40.

4. Préparation de pigment universelle selon la revendication 1, **caractérisée en ce que** les acides di- ou polycarboxyliques consistent en des acides di- ou polycarboxyliques saturés et/ou insaturés et/ou aromatiques, ainsi que leurs anhydrides ou esters.

5. Préparation de pigment universelle selon la revendication 4, **caractérisée en ce que** les acides di- ou polycarboxyliques consistent en des mélanges d'acides di- ou polycarboxyliques saturés et $\alpha,\beta$-insaturés en un rapport molaire de 1:99 à 99:1, de préférence de 80:20 à 40:60, de manière particulièrement préférée de 70:30 à 60:40.

6. Préparation de pigment universelle selon la revendication 4, **caractérisée en ce que** les acides di- ou polycarboxyliques consistent en l'acide citraconique, fumarique, itaconique, maléique et/ou mésaconique, l'acide phtalique, l'acide isophtalique, l'acide téréphtalique, l'acide 1, 4-cyclohexanedicarboxylique, l'acide malonique, l'acide succinique, l'acide glutarique, l'acide méthyltétra-, méthylhexahydrophtalique, l'acide hexahydrophtalique, l'acide tétrahydrophtalique, l'acide dodécanedioïque, l'acide pimélique, l'acide adipique, l'acide azélaïque, l'acide subérique,

l'acide sébacique, l'acide pyromellitique et/ou l'acide trimellitique ou leurs anhydrides ou esters ou les mélanges d'entre eux.

**7.** Préparation de pigment universelle selon la revendication 1, **caractérisée en ce que** les di- ou polyols consistent en des polyalkylène glycols de formule (I)

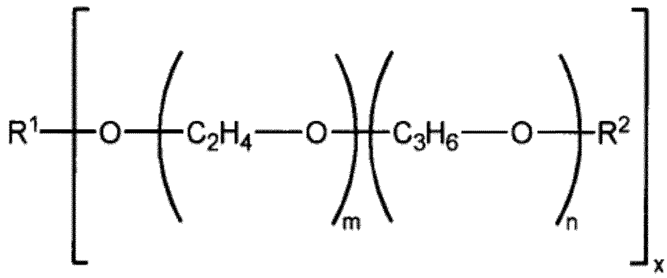

Formule (I)

avec

x = 1, 2, 3, 4 à 10, à condition que :

lorsque x = 1, les radicaux $R^1$ et $R^2$ représentent l'hydrogène,

lorsque x = 2, 3, 4 à 10, le radical $R^1$ représente un radical hydrocarboné linéaire ou ramifié, saturé, mono- ou polyinsaturé, aliphatique, cycloaliphatique ou aromatique, contenant 2 à 50 atomes de carbone, de préférence 3 à 30 atomes de carbone, qui peut être interrompu par des hétéroatomes tels que l'oxygène, l'azote ou le soufre, et $R^2$ représente l'hydrogène, les segments reliés en un nombre de x à $R^1$ pouvant être de structure identique ou différente,

m = 0, 1, 2, 3 à 100, de préférence 0, 1, 2, 3 à 35,

n = 0, 1, 2, 3 à 100, de préférence 0, 1, 2, 3 à 30,

à condition que le produit x* (m+n) = 2, 3, 4 à 100, de préférence 2, 3, 4 à 35.

**8.** Préparation de pigment universelle selon la revendication 7, **caractérisée en ce que** les unités de répétition $(-C_2H_4-O-)_m$ et $(-C_3H_6-O-)_n$ sont distribuées séquentiellement, statistiquement ou agencées selon une distribution en gradients dans la chaîne polymère.

**9.** Préparation de pigment universelle selon la revendication 7, **caractérisée en ce que** les polyalkylène glycols sont des polypropylène glycols ou des polypropylène-polyéthylène glycols ayant une masse molaire moyenne en nombre de 100 à 2 000 g/mol, de préférence de 140 à 1 500 g/mol, de manière particulièrement préférée de 180 à 1 000 g/mol.

**10.** Préparation de pigment universelle selon la revendication 1, **caractérisée en ce que** les produits de réaction (a1) présentent un indice OH compris entre 1 et 450 mg de KOH/g, de préférence entre 10 et 200 mg de KOH/g et de manière particulièrement préférée entre 20 et 130 mg de KOH/g.

**11.** Préparation de pigment universelle selon la revendication 10, **caractérisée en ce que** les produits de réaction (a1) présentent une teneur en doubles liaisons théorique de 0 à 3 mmol/g, de préférence de 0 à 2 mmol/g, de manière particulièrement préférée de 0,1 à 0,7 mmol/g.

**12.** Préparation de pigment universelle selon la revendication 1, **caractérisée en ce que** les produits de réaction (a2) sont fabriqués par une réaction d'alcoxylation de composés alcoxylables de formule (II)

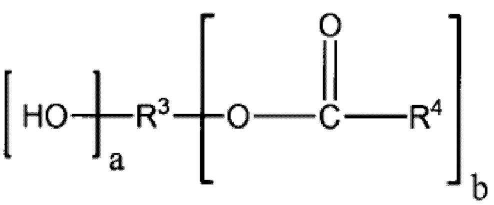

Formule (II)

dans laquelle

$R^3$ représente un radical hydrocarboné linéaire ou ramifié, saturé, mono- ou polyinsaturé, aliphatique, cycloaliphatique ou aromatique, contenant 2 à 50 atomes de carbone, de préférence 3 à 30 atomes de carbone, qui peut être interrompu par des hétéroatomes tels que l'oxygène, l'azote ou le soufre,
$R^4$ représente un radical hydrocarboné linéaire ou ramifié, saturé, mono- ou polyinsaturé, aliphatique, cycloaliphatique ou aromatique, qui peut être interrompu par des hétéroatomes tels que l'oxygène, l'azote ou le soufre, et qui peut être substitué avec des groupes OH, contenant 1 à 22 atomes de carbone, de préférence 6 à 20 atomes de carbone,
a = 1 à 8, de préférence 2 à 6,
b = 0 à 7, de préférence 1 à 4, de manière particulièrement préférée inférieur ou égal à 3, à condition que la somme de a et b = 2 à 8, de préférence 3 à 6, de manière particulièrement préférée soit inférieure à 6,
avec des oxydes d'alkylène.

**13.** Préparation de pigment universelle selon la revendication 1, **caractérisée en ce que** les composés alcoxylables sont des diols, des polyols, l'éthylène glycol, le diéthylène glycol, le polyéthylène glycol, le propylène glycol, le dipropylène glycol, le polypropylène glycol, des polyétherols, l'hexanediol, le butanediol, le néopentylglycol, l'hexylène glycol, l'acide ricinoléique, l'acide hydroxystéarique et l'acide polyhydroxystéarique, la glycérine, la polyglycérine, la pentaérythrite, le triméthylolpropane, des phénols à plusieurs fonctions OH, tels que les novolaques ou les polyphénols, le sorbitol, le sorbitane, l'isosorbide, le mannitol, et des sucres tels que le glucose, le saccharose, ainsi que leurs esters, et des acides gras tels que l'acide oléique, l'acide laurique, l'acide stéarique, de préférence l'acide hydroxystéarique, la glycérine, la polyglycérine, la pentaérythrite, le triméthylolpropane et les esters d'acides gras de sorbitane.

**14.** Préparation de pigment universelle selon la revendication 1, **caractérisée en ce que** les oxydes d'alkylène sont l'oxyde d'éthylène, l'oxyde de propylène, l'oxyde de butylène et/ou l'oxyde de styrène, de préférence l'oxyde d'éthylène et/ou l'oxyde de propylène.

**15.** Préparation de pigment universelle selon la revendication 1, **caractérisée en ce que** les produits de réaction (a2) présentent une masse molaire moyenne en poids de 300 à 15 000 g/mol, de préférence de 400 à 5 000 g/mol et de manière particulièrement préférée de 500 à 2 800 g/mol.

**16.** Préparation de pigment universelle selon la revendication 1, **caractérisée en ce que** les pigments sont des pigments organiques, inorganiques ou des pigments à base de noir de carbone.

**17.** Préparation de pigment universelle selon la revendication 1, contenant :

- 0,5 à 85,5 % en poids de produits de réaction (a1),
- 0,5 à 85,5 % en poids de produits de réaction (a2) et
- 5 à 95 % en poids d'au moins un pigment, choisi dans le groupe constitué par les pigments organiques, inorganiques, ou à base de noir de carbone.

**18.** Préparation de pigment universelle selon la revendication 17, **caractérisée en ce que** des additifs de dispersion et/ou d'autres composants auxiliaires sont ajoutés.

**19.** Préparation de pigment universelle selon la revendication 18, **caractérisée en ce que** la proportion de composés organiques volatils est < 20 % en poids, de préférence < 10 % en poids, de manière particulièrement préférée < 5 % en poids.

**20.** Préparation de pigment universelle selon la revendication 19, **caractérisée en ce qu'**elle présente une consistance fluide à température ambiante.

**21.** Préparation de pigment universelle selon la revendication 20, **caractérisée en ce qu'**elle présente à 25 °C et 100 1/s une viscosité < 5 000 mPas, de préférence < 3 000 mPas et de manière particulièrement préférée < 2 000 mPas.

**22.** Préparation de pigment universelle selon la revendication 21, **caractérisée en ce qu'**elle ne comprend pas de solvant organique ayant un point d'ébullition inférieur à 250 °C et pas d'eau.

**23.** Milieu de stabilisation de la floculation, contenant :

- 10 à 90, de préférence 20 à 80, de manière particulièrement préférée 40 à 60 % en poids de (a1) et
- 90 à 10, de préférence 80 à 20, de manière particulièrement préférée 60 à 40 % en poids de (a2).

**24.** Utilisation du milieu de stabilisation de la floculation selon la revendication 23 pour la fabrication de préparations de pigment.

**25.** Utilisation de la préparation de pigment universelle selon la revendication 1 pour la fabrication de peintures, de vernis, d'encres d'impression, d'agents de revêtement, de revêtements de sols, de masses de scellement et d'enduits.

**26.** Procédé de fabrication de la préparation de pigment universelle selon la revendication 1, **caractérisé en ce que** les produits de réaction (a1) et les produits de réaction (a2) sont tout d'abord fabriqués, puis mélangés, aucun ajout de solvants organiques volatils et/ou d'eau n'ayant lieu, puis les pigments sont incorporés.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6552091 B
- EP 0940406 A
- DE 102011010580
- WO 2009127668 A1
- WO 2006097378 A
- US 6063182 A
- EP 2361956 A1
- JP 2010119930 A
- DE 10310523 A1
- EP 1156086 A1
- WO 2006097378 A1


### In der Beschreibung aufgeführte Nicht-Patentliteratur


- Dictionary of Natural Products. Chapman and Hall/CRC Press, Taylor and Francis Group, 2011
- **N. SCHÖNFELDT.** Surface Active Ethylene Oxide Adducts. Pergamon Press, 1969